# EUROPEAN PATENT SPECIFICATION

(11) **EP 3 533 818 B1**
(45) Date of publication and mention of the grant of the patent: **17.01.2024**
(21) Application number: 17865377.0
(22) Date of filing: 27.10.2017
(51) Int. Cl.: C08G 65/336, C09K 3/18, C08G 65/323, C08G 77/24, C09D 5/16, C09D 171/02, C09D 183/08, C08G 65/00, C09D 171/00, C09D 183/12, C08G 77/46

(54) **PERFLUORO(POLY)ETHER GROUP-CONTAINING SILANE COMPOUND**
PERFLUOR(POLY)ETHERGRUPPENHALTIGE SILANVERBINDUNG
COMPOSÉ DE SILANE CONTENANT UN GROUPE PERFLUORO(POLY)ÉTHER

(30) Priority: 27.10.2016 JP 2016210726; 06.02.2017 JP 2017019755; 17.03.2017 JP 2017053410
(43) Date of publication of application: 04.09.2019
(73) Proprietor: Daikin Industries, Ltd., Osaka-shi, Osaka 530-0001 (JP)
(72) Inventor: MITSUHASHI, Hisashi, Osaka-shi Osaka 530-8323 (JP); NOSE, Masatoshi, Osaka-shi Osaka 530-8323 (JP); NOMURA, Takashi, Osaka-shi Osaka 530-8323 (JP); TAKANO, Shinya, Osaka-shi Osaka 530-8323 (JP); NAITOU, Masato, Osaka-shi Osaka 530-8323 (JP); HUPFIELD, Peter, Düsseldorf 40211 (DE)
(74) Representative: Hoffmann Eitle
(86) International application number: PCT/JP2017/038990
(87) International publication number: WO 2018/079743

(56) References cited:
- EP-A1- 2 915 833
- WO-A1-2014/069592
- US-A1- 2016 137 878

## Description

### Technical Field

The present invention relates to a perfluoro(poly)ether group-containing silane compound. The present invention also relates to a surface-treating agent including such a perfluoro(poly)ether group-containing silane compound.

### Background Art

A certain fluorine-containing compound is known to be able to provide, for example, excellent water-repellency, oil-repellency, and antifouling property when used for a surface treatment of a base material. Such a fluorine-containing silane compound known is a perfluoropolyether group-containing silane compound having a perfluoropolyether group in a molecular backbone, and having a hydrolyzable group bonding to a Si atom, at a molecular terminal or a terminal portion. For example, JP-A-2013-117012 describes a perfluoropolyether group-containing silane compound having a hydrolyzable group bonding to a Si atom, at a molecular terminal or a terminal portion.

A layer obtained from a surface-treating agent including the above fluorine-containing silane compound (hereinafter, also referred to as "surface-treating layer") is applied as a so-called functional thin film onto e.g. glass. In particular, such a surface-treating layer can exert the above functions even in the form of a thin film, and therefore is applied in an optical member required to have light permeability and/or transparency, such as glasses, a touch panel, or an operation screen of a mobile terminal.

US-A-2016/137878 discloses a water/oil repellent treatment agent which (i) comprises at least one fluorooxyalkylene group-containing polymer-modified silane of specified general formulae (1) to (4) in an amount of at least 50% of the total weight exclusive of diluting solvent and (ii) has a weight loss after 1h of heating at 250°C of ≤ 10% of the total weight exclusive of diluting solvent.

### Summary of Invention

### Problem to be Solved by the Invention

The above surface-treating layer may be required to further have durability to ultraviolet (UV) (UV resistance). According to the studies by the present inventors, however, it has been found that a surface-treating layer formed by use of the above perfluoropolyether group-containing silane compound may achieve no sufficient UV resistance in some cases.

An object of the present invention is to provide a perfluoro(poly)ether group-containing silane compound suitable for formation of a surface-treating layer having UV resistance. Another object of the present invention is to provide a surface-treating agent including such a compound. Still another object of the present invention is to provide an article having a surface-treating layer formed by use of such a surface-treating agent.

### Solution to Problem

Thus, the present invention provides a compound, which is a perfluoro(poly)ether group-containing silane compound of formula (A1) or (A2):

Rf-PFPE-X-SiR^{a}₃ (A1)

R^{a}₃Si-X-PFPE-X-SiR^{a}₃ (A2)

wherein
PFPE is a group of the formula:

-(OC₆F₁₂)*ₐ*-(OC₅F₁₀)*_{b}*-(OC₄F₈)*_{c}*-(OC₃F₆)*_{d}*-(OC₂F₄)*ₑ*-(OCF₂)*_{f}*-

wherein a to f each independently are an integer of 0-200, (*a*+*b*+*c*+*d*+*e*+*f*) is ≥ 1, and the occurrence order of the repeating units in parentheses with the indices *a-f* is not limited;
- Rf: each independently is C₁₋₁₆-alkyl optionally substituted with one or more F;
- X: each independently is optionally substituted C₂₋₂₀-alkylene;
- R^{a}: each independently is -Z-SiR¹*ₚ*R²*_{q}*R³*ᵣ*, wherein
Z each independently is O or a divalent organic group;
R¹ each independently is R^{a'} which has the same definition as R^{a};
the number of Si atoms linearly linked via Z group in R^{a} is ≤ 5;
R² each independently is OH or a hydrolyzable group;
R³ each independently is H or lower alkyl;
*p* each independently is an integer of 0-3;
*q* each independently is an integer of 0-3; and
*r* each independently is an integer of 0-3;
provided that (*p*+*q*+*r*) = 3 in each -Z-SiR¹ₚR²_{q}R³ᵣ, and two or more Si atoms having at least one R² are present in the formulae (A1) and (A2).

Also, the present invention provides a surface-treating agent containing at least one compound of the above formula (A1) and/or (A2), and also provides the use of this surface-treating agent as an antifouling coating agent or a water-proof coating agent.

Yet further, the present invention provides a pellet containing the present surface-treating agent. Last, but not least,the present invention provides an article comprising a base material and, on the surface thereof, a layer formed from the present compound or surface-treating agent.

Preferred embodiments of the invention are as defined in the appended dependent claims and/or in the following detailed description.

### Effect of the Invention

The present invention can provide a perfluoro(poly)ether group-containing silane compound suitable for formation of a surface-treating layer favorable in UV resistance. The present invention can also provide a surface-treating agent including such a compound. The present invention can further provide an article including such a compound or a surface-treating agent.

### Embodiments to Carry Out the Invention

Hereinafter, the perfluoro(poly)ether group-containing silane compound of the present invention will be described.

As used herein, a "divalent organic group" means a carbon-containing divalent group. Such a divalent organic group is not limited, and examples thereof include a divalent group where further one hydrogen atom is removed from a hydrocarbon group.

As used herein, a "hydrocarbon group" means a group that contains carbon and hydrogen, where one hydrogen atom is removed from hydrocarbon. Such a hydrocarbon group is not limited, and examples thereof include a hydrocarbon group having 1-20 carbon atoms, optionally substituted with one or more substituents, for example, an aliphatic hydrocarbon group and an aromatic hydrocarbon group. For example, the "aliphatic hydrocarbon group" may be linear, branched or cyclic, and may be saturated or unsaturated. For example, the hydrocarbon group may have one or more ring structures. For example, such a hydrocarbon group may have one or more N, O, S, Si, amide, sulfonyl, siloxane, carbonyl, carbonyloxy, and other groups at a terminal or in a molecular chain.

As used herein, each substituent of the "hydrocarbon group" is not limited, and examples thereof include a halogen atom; and one or more groups selected from C₁₋₆-alkyl, C₂₋₆-alkenyl, C₂₋₆-alkynyl, C₃₋₁₀-cycloalkyl, unsaturated C₃₋₁₀-cycloalkyl, 5- to 10-membered heterocyclyl, 5- to 10-membered unsaturated heterocyclyl, C₆₋₁₀-aryl and 5- to 10-membered heteroaryl, which are optionally substituted with one or more halogen atoms.

The present invention provides a perfluoro(poly)ether group(hereinafter, also referred to as "PFPE")-containing silane compound of formula (A1) or (A2) (hereinafter, also referred to as "the present compound").

Rf-PFPE-X-SiR^{a}₃ (A1)

R^{a}₃Si-X-PFPE-X-SiR^{a}₃ (A2)

In the formulae (A1) and (A2), Rf each independently is C₁₋₁₆-alkyl optionally substituted with one or more F.

For example, a" C₁₋₁₆-alkyl" in the C₁₋₁₆-alkyl optionally substituted with one or more F, may be linear or branched, and is preferably a linear or branched C₁₋₆-alkyl, in particular, C₁₋₃-alkyl, more preferably linear C₁₋₃-alkyl.

Rf is C₁₋₁₆-alkyl optionally substituted with one or more F, preferably CF₂H-C₁₋₁₅-perfluoroalkylene or C₁₋₁₆-perfluoroalkyl, further preferably C₁₋₁₆-perfluoroalkyl.

For example, the C₁₋₁₆-perfluoroalkyl group may be linear or branched, and is preferably linear or branched C₁₋₆-perfluoroalkyl, in particular, C₁₋₃-perfluoroalkyl, more preferably linear C₁₋₃-perfluoroalkyl, specifically -CF₃, - CF₂CF₃, or -CF₂CF₂CF₃.

In the formulae, PFPE is, independently at each occurrence, a group of the formula:

- (OC₆F₁₂)*ₐ*-(OC₅F₁₀)*_{b}*-(OC₄F₈)*_{c}*-(OC₃F₆)*_{d}*-(OC₂F₄)*ₑ*-(OCF₂)*_{f}*-

wherein a to f each independently are an integer of 0-200, (a+b+c+d+e+f) is ≥ 1. Preferably, a to f are each independently an integer of 0-100. (a+b+c+d+e+f) is preferably ≥ 5, more preferably ≥ 10,and is preferably ≤ 200, more preferably ≤ 100, for example, 10-200, more specifically 10-100. The occurrence order of the repeating units in parentheses with the indices *a-f* is not limited.

For example, these repeating units may be linear or branched, and is preferably linear. For example, -(OC₆F₁₂)- may be -(OCF₂CF₂CF₂CF₂CF₂CF₂)-, -(OCF(CF₃)CF₂CF₂CF₂CF₂)-, - (OCF₂CF(CF₃)CF₂CF₂CF₂)-, -(OCF₂CF₂CF(CF₃)CF₂CF₂)-, - (OCF₂CF₂CF₂CF(CF₃)CF₂)- or -(OCF₂CF₂CF₂CF₂CF(CF₃))-, and is preferably -(OCF₂CF₂CF₂CF₂CF₂CF₂)-. For example, -(OC₅F₁₀)- may be -(OCF₂CF₂CF₂CF₂CF₂)-, -(OCF(CF₃)CF₂CF₂CF₂)-, - (OCF₂CF(CF₃)CF₂CF₂)-, -(OCF₂CF₂CF(CF₃)CF₂)-, or - (OCF₂CF₂CF₂CF(CF₃))-, and is preferably -(OCF₂CF₂CF₂CF₂CF₂)-. For example,-(OC₄F₈)- may be any of -(OCF₂CF₂CF₂CF₂)-, - (OCF(CF₃)CF₂CF₂)-, -(OCF₂CF(CF₃)CF₂)-, -(OCF₂CF₂CF(CF₃))-, - (OC(CF₃)₂CF₂)-, -(OCF₂C(CF₃)₂)-, -(OCF(CF₃)CF(CF₃))-, - (OCF(C₂F₅)CF₂)- and -(OCF₂CF(C₂F₅))-, and is preferably - (OCF₂CF₂CF₂CF₂)-. For example,-(OC₃F₆)- may be any of - (OCF₂CF₂CF₂)-, -(OCF(CF₃)CF₂)- and -(OCF₂CF(CF₃)) -, and is preferably -(OCF₂CF₂CF₂)-. For example, -(OC₂F₄)- may be any of -(OCF₂CF₂)- and -(OCF(CF₃))-, and is preferably - (OCF₂CF₂)-.

In one embodiment, PFPE is -(OC₃F₆)_{d}-, preferably - (OCF₂CF₂CF₂)_{d}-, or -(OCF(CF₃)CF₂)_{d}-, wherein d is an integer of 1-200, preferably 5-200, more preferably 10-200. PFPE is more preferably -(OCF₂CF₂CF₂)_{d}-: wherein d is as defined above.

In another embodiment, PFPE is -(OC₄F₈)_{c}-(OC₃F₆)_{d}-(OC₂F₄)ₑ-(OCF₂)_{f}-: wherein c and d are each independently an integer of 0-30, e and f are each independently an integer of 1-200, preferably 5-200, more preferably 10-200, and (c+d+e+f) is an integer of ≥ 5, preferably ≥ 10, more preferably 10-200, and the occurrence order of the repeating units in parentheses with a subscript c, d, e or f is not limited. PFPE is preferably -(OCF₂CF₂CF₂CF₂)_{c}-(OCF₂CF₂CF₂)_{d}-(OCF₂CF₂)ₑ-(OCF₂)_{f}-. In one embodiment, for example, PFPE may be -(OC₂F₄)ₑ-(OCF₂)_{f}-: wherein e and f are each independently an integer of 1-200, preferably 5-200, more preferably 10-200, and the occurrence order of the repeating units in parentheses with a subscript e or f is not limited.

In still another embodiment, PFPE is -(R⁶-R⁷)ⱼ-, wherein R⁶ is OCF₂ or OC₂F₄, preferably OC₂F₄, and R⁷ is OC₂F₄, OC₃F₆, OC₄F₈, OC₅F₁₀, OC₆F₁₂, or a combination of two or three groups independently selected from these groups. R⁷ is preferably a group selected from OC₂F₄, OC₃F₆ and OC₄F₈, a group selected from OC₃F₆, OC₄F₈, OC₅F₁₀ and OC₆F₁₂, or a combination of two or three groups independently selected from these groups. The combination of two or three groups independently selected from OC₂F₄, OC₃F₆ and OC₄F₈ is not limited, and examples thereof include -OC₂F₄OC₃F₆-, - OC₂F₄OC₄F₈-, -OC₃F₆OC₂F₄-, -OC₃F₆OC₃F₆-, -OC₃F₆OC₄F₈-, - OC₄F₈OC₄F₈-, -OC₄F₈OC₃F₆-, -OC₄F₈OC₂F₄-, -OC₂F₄OC₂F₄OC₃F₆-, - OC₂F₄OC₂F₄OC₄F₈-, -OC₂F₄OC₃F₆ OC₂F₄-, -OC₂F₄OC₃F₆ OC₃F₆ -, - OC₂F₄OC₄F₈OC₂F₄-, -OC₃F₆OC₂F₄OC₂F₄-, -OC₃F₆OC₂F₄OC₃F₆-, - OC₃F₆OC₃F₆OC₂F₄-, and -OC₄F₈OC₂F₄OC₂F₄-. j is an integer of ≥ 2, preferably ≥ 3, more preferably ≥ 5, and ≤ 100, preferably ≤ 50. j is, for example, an integer of 2-100, specifically an integer of 2-50. In the formulae, for example, OC₂F₄, OC₃F₆, OC₄F₈, OC₅F₁₀ and OC₆F₁₂ may be linear or branched, and are preferably linear. In this embodiment, PFPE is preferably -(OC₂F₄-OC₃F₆)ⱼ- or -(OC₂F₄-OC₄F₈)ⱼ-.

The ratio of e to f (hereinafter, "e/f ratio") in PFPE is 0.1-10, preferably 0.2-5.0, more preferably 0.2-2.0, further preferably 0.2-1.5, particularly preferably 0.2-0.85. When the e/f ratio is ≤ 10, lubricity, friction durability and chemical resistance (for example, durability to artificial sweat) of a surface-treating layer obtained from the compound are more enhanced. As the e/f ratio is lower, lubricity and friction durability of the surface-treating layer are more enhanced. On the other hand, when the e/f ratio is ≥ 0.1, stability of the compound can be more enhanced. As the e/f ratio is higher, stability of the compound is more enhanced.

In the formulae (A1) and (A2), X is optionally substituted C₂₋₂₀-alkylene. The alkylene group refers to a group having a -(C_{α}H_{2α})- structure. In X, α is an integer of 2-20. For example, the alkylene group may be linear or branched, and is preferably linear. The number of carbon atoms is preferably 2-10, more preferably 2-5. For example, the alkylene group may be substituted with a halogen atom. The alkylene group is preferably unsubstituted. A specific example of the alkylene group is unsubstituted C₂₋₁₀-alkylene (preferably C₂₋₅-alkylene), in particular, unsubstituted linear C₂₋₁₀-alkylene alkylene (preferably C₂₋₅-alkylene) . X is understood to be a linker for linking a perfluoropolyether moiety (Rf-PFPE moiety or -PFPE-moiety) that mainly provides water-repellency and surface lubricity, to a silane moiety (-SiR^{a}₃ moiety) that is to be hydrolyzed to provide a binding ability to a base material, in any compound of the formulae (A1) and (A2). It is presumed that, when X has such a structure, the bond energy at the linker moiety can be higher than that at a linker moiety having an ether bond or an amide bond, resulting in an enhancement in UV resistance of a surface-treating layer formed. Furthermore, the PFPE-containing silane compound of the present invention can contribute to formation of a surface-treating layer having favorable UV resistance even when it is repeatedly irradiated with UV. UV resistance can be evaluated by, for example, measurement of the change in physical properties (for example, contact angle) of a surface-treating layer formed, before and after UV irradiation, as described below.

The present compound can have the above structure of X, thereby contributing to formation of a surface-treating layer having chemical durability (for example, being hardly degraded even under an acid and/or alkaline environment, more specifically, an environment where sweat may be attached more easily). The present compound can have the above structure of X, thereby contributing to formation of a surface-treating layer favorable in friction durability, in particular, contributing to formation of a surface-treating layer enhanced in friction resistance even under an environment easily exposed to an acid and/or alkaline environment.

In the formulae (A1) and (A2), R^{a} each independently is -Z-SiR¹ₚR²_{q}R³ᵣ.

In the formulae, Z each independently is O or a divalent organic group.

Z is preferably a divalent organic group, and does not include a group which forms a siloxane bond together with a Si atom (Si atom to which R^{a} is bound) present in a terminal of the molecular backbone in formula (A1) or (A2).

Z is preferably alkylene; -(CH₂)_{g}-O-(CH₂)ₕ- wherein g and h each independently are an integer of 1-6; or - phenylene-(CH₂)ᵢ- wherein i is an integer of 0-6. For example, such groups may be substituted with one or more substituents selected from F, a C₁₋₆-alkyl, C₂₋₆-alkenyl and C₂₋₆-alkynyl. Z is more preferably linear or branched alkylene, further preferably linear alkylene from the viewpoint of particularly favorable UV resistance. The number of carbon atom(s) forming the alkylene group in Z is preferably 1-8, more preferably 1-6, further preferably 1-3. The alkylene group is as described above.

In the formulae, R¹ each independently is R^{a}' which has the same definition as R^{a}.

The number of Si atoms linearly linked via the Z group in R^{a} is ≤ 5. That is, when at least one R¹ is present in R^{a}, the number of Si atoms linearly linked via the Z group in R^{a} is ≥ 2, and the number of Si atoms linearly linked via the Z group is ≤ 5. Herein, "the number of Si atoms linearly linked via the Z group in R^{a}" is equal to the number of repeating units of -Z-Si- linearly linked in R^{a}.

One example where Si atoms are, for example, linked via the Z group in R^{a} is shown below.

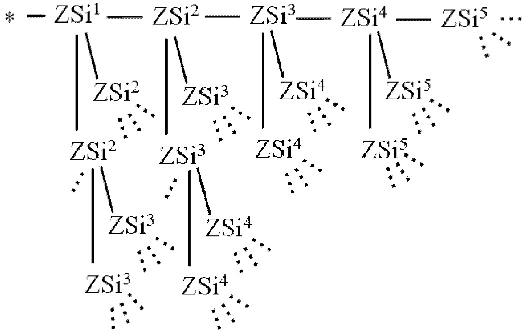

In the formula, "*" means a moiety bonding to Si of the backbone, and "..." means that a predetermined group other than ZSi is bound, namely, means a point at which repeating of ZSi is terminated when all three bonds of Si atom correspond to "...". The number on the right shoulder of Si means the number of occurrences of Si linearly linked via the Z group from *. That is, a chain in which the repeat of ZSi is completed at Si² means that the "number of Si atoms linearly linked via the Z group in R^{a}" is 2, and, similarly, a chain in which the repeat of ZSi is completed at Si³, Si⁴ or Si⁵ means that the "number of Si atoms linearly linked via the Z group in R^{a}" is 3, 4 or 5, respectively. While a plurality of ZSi chains are present in R^{a} as is clear from the above formula, all the chains do not necessarily have the same length, and may each have any length.

In a preferable embodiment, the "number of Si atoms linearly linked via the Z group in R^{a}" is 1 (left formula) or 2 (right formula) in all chains, as described below.

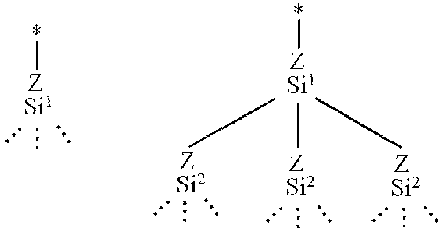

In one embodiment, the number of Si atoms linearly linked via the Z group in R^{a} is 1 or 2, preferably 1.

In the formulae, R² each independently is OH or a hydrolyzable group.

The "hydrolyzable group", as used herein, means a group that can be removed from the main backbone of the compound by a hydrolysis reaction. Examples of the hydrolyzable group include -OR, -OCOR, -O-N=CR₂, -NR₂, -NHR and halogen (wherein R is optionally substituted C₁₋₄-alkyl), and the hydrolyzable group is preferably -OR (alkoxy). Examples of R include unsubstituted alkyl such as methyl, ethyl, propyl, isopropyl, n-butyl and isobutyl; and substituted alkyl such as chloromethyl. Among them, alkyl, in particular unsubstituted alkyl, is preferable, and methyl or ethyl is more preferable. The hydroxyl group is not limited, and, for example, may be generated by hydrolysis of the hydrolyzable group.

R² preferably is -OR wherein R is optionally substituted C₁₋₃-alkyl, more preferably methyl.

In the formulae, R³ r each independently is H or lower alkyl. The lower alkyl is preferably C₁₋₂₀-alkyl, more preferably C₁₋₆-alkyl, further preferably methyl.

In the formulae, p each independently is an integer of 0-3; q each independently is an integer of 0-3; and r each independently is an integer of 0-3, provided that (p+q+r) = 3 in each -Z-SiR¹ₚR²_{q}R³ᵣ is 3.

In a preferable embodiment, q in R^{a}' (or R^{a} when R^{a}' is absent) at a terminal in R^{a} preferably ≥ 2, for example, 2 or 3, more preferably 3.

In a preferable embodiment, R^{a} can have at least one -Si (-Z-SiR²_{q}R³ᵣ)₂ or -Si (-Z-SiR²_{q}R³ᵣ)₃, preferably -Si (-Z-SiR²_{q}R³ᵣ)₃, at a terminal portion. In the formula, the (-Z-SiR²_{q}R³ᵣ) unit is preferably (-Z-SiR²₃). In a still preferable embodiment, all terminal portions of R^{a} can be -Si (-Z-SiR²_{q}R³ᵣ)₃, preferably -Si (-Z-SiR²₃)₃.

In the formulae (A1) and (A2), two or more Si atoms having at least one R² are present. The present compound can have such a structure to thereby allow for formation of a surface-treating layer that can be favorably bound to a base material surface.

In the PFPE-containing silane compound ofthe formula (A1) or (A2), the average molecular weight of the Rf-PFPE-moiety is not limited, and is 500-30,000, preferably 1,500-30,000, more preferably 2,000-10,000.

In another embodiment, the number average molecular weight of the Rf-PFPE moiety is 500-30,000, preferably 1,000-20,000, more preferably 2,000-15,000.

In another embodiment, the number average molecular weight of the Rf-PFPE-moiety or the -PFPE-moiety can be 4,000-30,000, preferably 5,000-10,000.

The present compound of formula (A1) or (A2) is not limited, and can have an average molecular weight of 5 × 10² to 1 × 10⁵. In particular, it preferably has an average molecular weight of 2,000-30,000, more preferably 2,500-12,000, from the viewpoint of friction durability. In the present invention, the "average molecular weight" refers to a number average molecular weight, and the "average molecular weight" is defined as a value obtained by ¹⁹F-NMR measurement.

In a preferable embodiment, in the present compound of formula (A1) or (A2),
Rf a C₁₋₁₆-perfluoroalkyl;
PFPE is a group of formula (a), (b) or (c):

   -(OC₃F₆)*_{d}*- (a)
wherein d is an integer of 1-200;

   -(OC₄F₈)*_{c}*-(OC₃ F₆)*_{d}*-(OC₂F₄)*ₑ*-(OCF₂)*_{f}*- (b)
wherein
   - *c, d*: each independently are an integer of 0-30;
   - *e*, *f*: each independently are an integer of 1-200; and (*c*+*d*+*e*+*f*) is an integer of 10-200; and the occurrence order of the repeating units in parentheses with the indices *c* to *f* is not limited;
wherein

   -(R⁶⁻R⁷)*ⱼ*- (c)

   R⁶ is OCF₂ or OC₂F₄;
   R⁷ is OC₂F₄, OC₃F₆, OC₄F₈, OC₅F₁₀, OC₆F₁₂ or a combination of two or three groups thereof; and
   j is an integer of 2-100;
      X is unsubstituted linear C₂₋₁₀-alkylene;
      R^{a} each independently is -Z-SiR¹ₚR²_{q}R³ᵣ;
      Z each independently is O or a divalent organic group;
      R² each independently is OH or a hydrolyzable group; and
      q is 3.

Any compound of the formulae (A1) and (A2) can be obtained by, for example, introducing a hydroxyl group to a terminal, with a perfluoropolyether derivative corresponding to the Rf-PFPE-moiety, as a raw material, then introducing a group having an unsaturated bond, to a terminal, reacting the group having an unsaturated bond and a silyl derivative having a halogen atom, further introducing a hydroxyl group to a terminal of the silyl group, and reacting the group having an unsaturated bond introduced and the silyl derivative. For example, the compound can be synthesized as described in WO2014/069592.

Next, the surface-treating agent of the present invention (the present surface-treating agent) will be described.

The present surface-treating agent contains at least one PFPE-containing silane compound of formula (A1) and/or (A2). The PFPE-containing silane compound is as described above.

The present surface-treating agent can impart water-repellency, oil-repellency, antifouling property, friction durability, and UV resistance to a base material, is not limited, and can be suitably used as an antifouling coating agent.

For example, the present surface-treating agent may be diluted with a solvent. Such a solvent is not limited, and examples thereof include:
any fluorine atom-containing solvent selected from perfluorohexane, CF₃CF₂CHCl₂, CF₃CH₂CF₂CH₃, CF₃CHFCHFC₂F₅, 1,1,1,2,2,3,3,4,4,5,5,6,6-tridecafluorooctane, 1,1,2,2,3,3,4-heptafluorocyclopentane (e.g. Zeorora H (trade name)), C₄F₉OCH₃, C₄F₉OC₂H₅, CF₃CH₂OCF₂CHF₂ , C₆F₁₃CH=CH₂, xylene hexafluoride, perfluorobenzene, methyl pentadecafluoroheptyl ketone, trifluoroethanol, pentafluoropropanol, hexafluoroisopropanol, HCF₂CF₂CH₂OH, methyl trifluoromethanesulfonate, trifluoroacetic acid and CF₃O(CF₂CF₂O)ₘ₁(CF₂O)ₙ₁CF₂CF₃ wherein m1 and n1 are each independently an integer of 0-1000, and the occurrence order of repeating units in parentheses with a symbol m1 or n1 is not limited, provided that the (m1+n1) ≥ 1; 1,1-dichloro-2,3,3,3-tetrafluoro-1-propene, 1,2-dichloro-1,3,3,3-tetrafluoro-1-propene, 1,2-dichloro-3,3,3-trifluoro-1-propene, 1,1-dichloro-3,3,3-trifluoro-1-propene, 1,1,2-trichloro-3,3,3-trifluoro-1-propene, and 1,1,1,4,4,4-hexafluoro-2-butene.

The water content in the solvent is preferably ≤ 20 ppm in terms of the mass. The water content can be measured by use of the Karl Fischer method. The water content can be within the range, thereby resulting in an enhancement in storage stability of the surface-treating agent.

For example, the surface-treating agent including the present compound may include other components in addition to the PFPE-containing silane compound. Such other components are not limited, and examples thereof include other surface treatment compounds, a (non-reactive) fluoropolyether compound that can be understood as a fluorine-containing oil, preferably a perfluoro(poly)ether compound (hereinafter, referred to as "fluorine-containing oil"), a (non-reactive) silicone compound (hereinafter, referred to as "silicone oil") that can be understood as a silicone oil, an alcohol, a catalyst, a transition metal, a halide ion, and a compound containing an atom having an unshared electron pair in a molecular structure.

Such other surface treatment compounds are not limited, and examples thereof include at least one perfluoro(poly)ether group-containing silane compound of any of the following formulae (1A), (2A), (1B), (2B), (1C), (2C), (1D) and (2D): 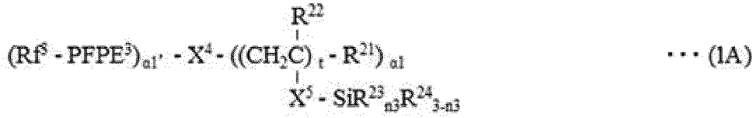 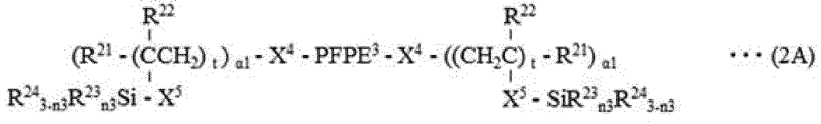 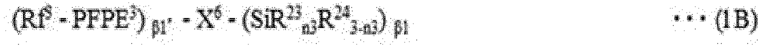 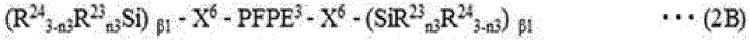 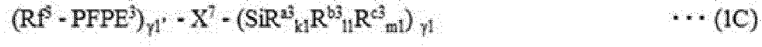 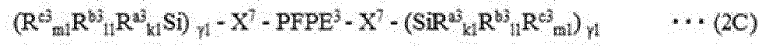 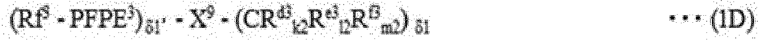 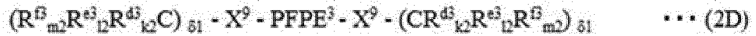 Wherein, each independently and at each occurrence,
PFPE³ is a group of the formula:

   -(OC₆F₁₂)ₐ₁-(OC₅F₁₀)_{b1}-(OC₄F₈)_{c1}-(OC₃F₆)_{d1}-(OC₂F₄)ₑ₁- (OCF₂)_{f1}-

   wherein a1, b1, c1, d1, e1 and f1 are each independently an integer of 0-200, the sum of a1, b1, c1, d1, e1 and f1 is at least 1, and the occurrence order of the repeating units in parentheses with the symbols a1-f1 is not limited;
Rf³ is C₁₋₁₆-alkyl optionally substituted with one or more F;
R²³ is OH or a hydrolyzable group;
R²⁴ is H or C₁₋₂₂-alkyl;
R²¹ is H or halogen;
R²² is H or lower alkyl;
n3 is an integer of 0-3 per unit (-SiR²³ₙ₃R²⁴₃₋ₙ₃);
provided that at least one n3 is an integer of 1-3 in the formulae (1A), (2A), (1B) and (2B);
X⁴ is a single bond or a 2-10 valent organic group;
X⁵ is a single bond or a divalent organic group;
t is an integer of 1-10;
α1 is an integer of 1-9;
α1' is an integer of 1-9;
X⁶ is a single bond or a 2-10 valent organic group;
β1 is an integer of 1-9;
β1' is an integer of 1-9;
X⁷ is a single bond or a 2-10 valent organic group;
γ1 is an integer of 1-9;
γ1' is an integer of 1-9;
R^{a3} is -Z³-SiR⁷¹ₚ₁R⁷²_{q1}R⁷³ᵣ₁;
Z³ is O or a divalent organic group;
R⁷¹ is R^{a3}' which has the same definition as R^{a3};
the number of Si atoms linearly linked via Z³ group in R^{a3} is up to 5;
R⁷² is OH or a hydrolyzable group;
R⁷³ is H or lower alkyl;
p1 is an integer of 0-3;
q1 is an integer of 0-3;
r1 is an integer of 0-3;
provided that at least one q1 in the formulae (1C) and (2C) is an integer of 1-3;
R^{b3} is OH or a hydrolyzable group;
R^{c3} is H or lower alkyl;
k1 is an integer of 1-3;
l1 is an integer of 0-2;
m1 is an integer of 0-2;
X⁹ is a single bond or a 2-10 valent organic group;
61 is an integer of 1-9;
61' is an integer of 1-9;
R^{d3} is -Z⁴-CR⁸¹ₚ₂R⁸²_{q2}R⁸³ᵣ₂;
Z⁴ is O or a divalent organic group;
R⁸¹ is R^{d3}' which has the same definition as R^{d3};

The number of C atoms linearly linked via Z⁴ group in R^{d3} is up to 5;
R⁸² is -Y-SiR⁸⁵ₙ₂R⁸⁶₃₋ₙ₂;
Y is a divalent organic group;
R⁸⁵ is OH or a hydrolyzable group;
R⁸⁶ is H or lower alkyl;
n2 is an integer of 1-3 per unit (-Y-SiR⁸⁵ₙ₂R⁸⁶₃₋ₙ₂);
provided that at least one n2 in the formulae (1D) and (2D) is an integer of 1-3;
R⁸³ is H or lower alkyl;
p2 is an integer of 0-3;
q2 is an integer of 0-3;
r2 is an integer of 0-3;
R^{e3} is -Y-SiR⁸⁵ₙ₂R⁸⁶₃₋ₙ₂
R^{f3} is H or lower alkyl;
k2 is an integer of 0-3;
l2 is an integer of 0-3; and
m2 is an integer of 0-3;
provided that at least one q2 is 2 or 3 or at least one l2 is 2 or 3, in the formulae (1D) and (2D).

The fluorine-containing oil is not limited, and examples thereof include a compound (perfluoro(poly)ether compound) of formula (3):

Rf⁵-(OC₄F₈)_{a'}-(OC₃F₆)_{b'}-(OC₂F₄)_{c'}-(OCF₂)_{d'}-Rf⁶ (3)

wherein Rf⁵ is C₁₋₁₆-alkyl optionally substituted with one or more F (preferably C₁₋₁₆-perfluoroalkyl),, Rf⁶ is H, F or C₁₋₁₆-alkyl optionally substituted with one or more F (preferably C₁₋₁₆-perfluoroalkyl), and Rf⁵ and Rf⁶ more preferably each independently are C₁₋₃-perfluoroalkyl;

In the formula, a', b', c' and d' represent the numbers of the four repeating units of perfluoro(poly)ether which contribute a main backbone of the polymer, respectively, and are, independently of each other, an integer of 0-300, and the sum of a', b', c' and d' is at least 1, preferably 1-300, more preferably 20-300. The occurrence order of repeating units in parentheses with a subscript a', b', c' or d' is not limited. In these repeating units, -(OC₄F₈)- may be any of - (OCF₂CF₂CF₂CF₂)-, -(OCF(CF₃)CF₂CF₂)-, -(OCF₂CF(CF₃)CF₂)-, - (OCF₂CF₂CF(CF₃))-, -(OC(CF₃)₂CF₂)-, -(OCF₂C(CF₃)₂)-, - (OCF(CF₃)CF(CF₃))-, -(OCF(C₂F₅)CF₂)- and -(OCF₂CF(C₂F₅))-, and is preferably -(OCF₂CF₂CF₂CF₂)-; -(OC₃F₆)- may be any of -(OCF₂CF₂CF₂)-, -(OCF(CF₃)CF₂)- and -(OCF₂CF(CF₃))-, and is preferably -(OCF₂CF₂CF₂)-; and -(OC₂F₄)- may be any of - (OCF₂CF₂)- and -(OCF(CF₃))-, and is preferably -(OCF₂CF₂)-.

Examples of the perfluoro(poly)ether compound of formula (3) include a compound (for example, which may be a single compound or a combination of two or more kinds) of any of the formulae (3a) and (3b):

Rf⁵-(OCF₂CF₂CF₂)_{b"}-Rf⁶ (3a)

Rf⁵-(OCF₂CF₂CF₂CF₂)_{a"}-(OCF₂CF₂CF₂)_{b"}-(OCF₂CF₂)_{c"}- (OCF₂)_{d"}-Rf⁶ (3b)

wherein Rf⁵ and Rf⁶ are as described above; b'' is an integer of 1-100 in formula (3a); and a'' and b'' are each independently an integer of 1-30, and c'' and d'' are each independently an integer of 1-300, in formula (3b). The occurrence order of repeating units in parentheses with a subscript a", b", c", or d'' is not limited.

For example, the fluorine-containing oil may have an average molecular weight of 1,000-30,000. Thus, high surface lubricity can be obtained.

The content of the fluorine-containing oil in the surface-treating agent of the present invention can be, for example, 0-500 parts by mass (pbm), preferably 0-400 pbm, more preferably 5-300 pbm with respect to 100 pbm of the perfluoro(poly)ether group-containing silane compound (when two or more kinds of such oils are contained, the content means the total content of such oils, hereinafter the same shall apply).

For example, the compounds of formulae (3a) and (3b) may be each used singly or in combinations of two or more kinds. The compound of formula (3b) is more preferably used than the compound of formula (3a) because higher surface lubricity is obtained. When these compounds are used in a combination, the mass ratio of the compound of formula (3a) to the compound of formula (3b) is preferably 1:1 to 1:30, more preferably 1:1 to 1:10. When the mass ratio is within the range, a surface-treating layer satisfying surface lubricity and friction durability in a well-balanced manner can be obtained.

In one embodiment, the fluorine-containing oil includes at least one compound of formula (3b). In such an embodiment, the mass ratio of the total of the perfluoro(poly)ether group-containing silane compound to the compound of formula (3b) in the surface-treating agent is preferably 10:1 to 1:10, still more preferably 4:1 to 1:4.

In one embodiment, the average molecular weight of the compound of formula (3a) is preferably 2,000-8,000.

In one embodiment, the average molecular weight of the compound of formula (3b) is preferably 8,000-30,000.

In another embodiment, the average molecular weight of the compound of formula (3b) is preferably 3,000-8,000.

In a preferable embodiment, when the surface-treating layer is formed according to a vacuum deposition method, for example, the average molecular weight of the fluorine-containing oil may be higher than the average molecular weight of the perfluoro(poly)ether group-containing silane compound. For example, the number average molecular weight of the fluorine-containing oil may be higher than the number average molecular weight of the perfluoro(poly)ether group-containing silane compound by 2,000 or more, preferably 3,000 or more, more preferably 5,000 or more. When these average molecular weights are adopted, more excellent friction durability and surface lubricity can be obtained.

For example, the fluorine-containing oil may be a compound of the formula Rf'-F wherein Rf' is C₅₋₁₆-perfluoroalkyl; from another viewpoint. For example, the fluorine-containing oil may be a chlorotrifluoroethylene oligomer. The compound represented by Rf'-F and the chlorotrifluoroethylene oligomer are preferable because these compounds have high affinity with a perfluoro(poly)ether group-containing silane compound where Rf is C₁₋₁₆-perfluoroalkyl.

The fluorine-containing oil contributes to increasing of surface lubricity of the surface-treating layer.

For example, a linear or cyclic silicone oil having ≤ 2,000 siloxane bonds can be used as the silicone oil. For example, the linear silicone oil may be any of so-called straight silicone oil and modified silicone oil. Examples of the straight silicone oil include dimethyl silicone oils, methyl phenyl silicone oils, and methyl hydrogen silicone oils. Examples of the modified silicone oil include straight silicone oils modified by alkyl, aralkyl, polyether, higher fatty acid ester, fluoroalkyl, amino, epoxy, carboxyl, alcohol, or the like. Examples of the cyclic silicone oil include cyclic dimethyl siloxane oils.

The content of such a silicone oil in the present surface-treating agent can be, for example, 0-300 pbm, preferably 0-200 pbm with respect to 100 pbm of the total of the perfluoro(poly)ether group-containing silane compound and the carboxylate ester compound (when two or more kinds of such oils are contained, the content means the total content of such oils, hereinafter the same shall apply).

The silicone oil contributes to increasing of the surface lubricity of the surface-treating layer.

Examples of the catalyst include acids (for example, acetic acid and trifluoroacetic acid), bases (for example, ammonia, triethylamine, and diethylamine), and transition metals (for example, Ti, Ni, and Sn).

The catalyst promotes hydrolysis and dehydration condensation of the perfluoro(poly)ether group-containing silane compound, and promotes formation of the surface-treating layer.

Examples of the transition metals include platinum, ruthenium, and rhodium.

Examples of the halide ions include chloride ions.

The compound containing an atom having an unshared electron pair in a molecular structure preferably contains at least one atom selected from N, O, P and S, more preferably S or N.

The compound containing an atom having an unshared electron pair in a molecular structure preferably contains at least one functional group selected from amino, amide, sulfinyl, P=O, S=O and sulfonyl, more preferably at least one functional group selected from P=O and S=O, in a molecular structure.

The compound containing an atom having an unshared electron pair in a molecular structure is preferably at least one compound selected from an aliphatic amine compound, an aromatic amine compound, an amide phosphate compound, an amide compound, a urea compound, and a sulfoxide compound, more preferably at least one compound selected from an aliphatic amine compound, an aromatic amine compound, amide phosphate, a urea compound, and a sulfoxide compound, particularly preferably at least one compound selected from a sulfoxide compound, an aliphatic amine compound and an aromatic amine compound, further preferably a sulfoxide compound.

Examples of the aliphatic amine compound include diethylamine and triethylamine. Examples of the aromatic amine compound include aniline and pyridine. Examples of the amide phosphate compound can include hexamethylphosphoramide. Examples of the amide compound include N,N-diethylacetamide, N,N-diethylformamide, N,N-dimethylacetamide, N-methylformamide, N,N-dimethylformamide, and N-methylpyrrolidone. Examples of the urea compound can include tetramethylurea. Examples of the sulfoxide compound include dimethylsulfoxide (DMSO), tetramethylenesulfoxide, methylphenylsulfoxide, and diphenylsulfoxide. Among these compounds, dimethylsulfoxide or tetramethylenesulfoxide is preferably used.

Examples of any component other than the above also include tetraethoxysilane, methyltrimethoxysilane, 3-aminopropyltrimethoxysilane, 3-glycidoxypropyltrimethoxysilane, and methyltriacetoxysilane.

Examples of any component other than the above include an alcohol compound having 1-6 carbon atoms.

The present surface-treating agent is impregnated into a porous material such as a porous ceramic material, or a metal fiber that obtained by solidifying a steel wool to obtain a pellet. The pellet can be used, for example, in vacuum deposition.

The present surface-treating agent is suitably used as a surface-treating agent because it can impart water-repellency, oil-repellency, antifouling property, waterproof property, high friction durability, and UV resistance to a base material. Specifically, the present surface-treating agent is not limited, and can be suitably used as an antifouling coating agent or a water-proof coating agent.

Next, the article of the present invention (the present article) will be described.

The present article includes a base material, and a layer (surface-treating layer) formed from the present compound or the present surface-treating agent , on a surface of the base material. The article can be produced as follows, for example.

First, a base material is prepared. For example, the base material usable in the present invention may be formed from, for example, any suitable material such as glass, a resin (for example, which may be a natural or synthetic resin such as a general plastic material, and may be in the form of e.g. a plate or a film), a metal (for example, which may be a metal itself, such as aluminum, copper, or iron, or a composite such as an alloy), ceramics, a semiconductor (e.g. silicon or germanium), a fiber (e.g. woven fabric or unwoven clothlike), fur, leather, a wood material, a pottery, a stone material, or a building component.

The glass is preferably sapphire glass, soda lime glass, alkali aluminosilicate glass, borosilicate glass, alkali-free glass, crystal glass, or quartz glass, particularly preferably soda lime glass chemically reinforced, alkali aluminosilicate glass chemically reinforced, and borosilicate glass chemically bound.

The resin is preferably an acrylic resin or polycarbonate.

For example, when the article to be produced is an optical member, the material composing the surface of the base material may be a material for optical members, such as glass or transparent plastic. When the article to be produced is an optical member, for example, any layer (or film) such as a hard coating layer or an antireflection layer may be formed on the surface (outermost layer) of the base material. As the antireflection layer, either a monolayer antireflection layer or a multilayer antireflection layer may be used. Examples of an inorganic substance usable for the antireflection layer include SiO₂, SiO, ZrO₂, TiO₂, TiO, Ti₂O₃, Ti₂O₅, Al₂O₃, Ta₂O₃, CeO₂, MgO, Y₂O₃, SnO₂, MgF₂, and WO₃. Such inorganic substances may be used singly or in combinations (for example, as a mixture) of two or more kinds thereof. When a multilayer antireflection layer is formed, SiO₂ and/or SiO are/is preferably used for the outermost layer. When the article to be produced is an optical glass component for a touch panel, the article may have a transparent electrode, for example, a thin film using indium tin oxide (ITO) or indium zinc oxide, on a part of the surface of the base material (glass). The base material may have an insulating layer, an adhesive layer, a protecting layer, a decorated frame layer (I-CON), a sprayed film layer, a hard coating layer, a polarizing film, a phase difference film, and a liquid crystal display module, depending on the specific specifications.

The shape of the base material is not limited. A surface region of the base material, on which the surface-treating layer is to be formed, may be at least a part of the surface of the base material, and can be appropriately determined depending on e.g. the intended use and the specific specifications of the article to be produced.

For example, at least the surface portion of such a base material may be made of a material originally having a hydroxyl group. Examples of such a material include glass, and also include a metal on which a natural oxidized film or a thermal oxidized film is formed (in particular, base metal), ceramics, and a semiconductor. Alternatively, as in a resin, when the hydroxyl group is present but not sufficient, or when the hydroxyl group is originally absent, any pre-treatment of the base material can be conducted to thereby introduce a hydroxyl group onto the surface of the base material or increase the amount of the hydroxyl group on the surface. Examples of such a pre-treatment include a plasma treatment (for example, corona discharge) and ion beam irradiation. A plasma treatment can be suitably utilized in order to not only introduce a hydroxyl group onto the surface of the base material or increase the amount of a hydroxyl group on the surface, but also to clean the surface of the base material (remove foreign substances). Other examples of such a pre-treatment include a method where a monolayer of a surface adsorbent having a carbon-carbon unsaturated bond group is previously formed on the surface of the base material by a LB method (Langmuir-Blodgett method) or a chemical adsorption method and thereafter the unsaturated bond is cleaved under an atmosphere containing e.g. oxygen and nitrogen.

Alternatively, such a base material may be that of which at least the surface portion made of a material containing a silicone compound having other reactive group(s) such as one or more Si-H group(s) or alkoxysilane.

Next, a film of the present surface-treating agent is formed on the surface of such a base material, and is, if necessary, subjected to a post-treatment, and thus the surface-treating layer is formed from the present surface-treating agent.

The film of the present surface-treating agent can be formed by applying the present surface-treating agent onto the surface of the base material so that the surface is coated. The coating method is not limited. For example, a wet coating method and a dry coating method can be used.

Examples of the wet coating method include dip coating, spin coating, flow coating, spray coating, roll coating and gravure coating.

Examples of the dry coating method include deposition (usually vacuum deposition), sputtering and CVD. Specific examples of a deposition method (usually vacuum deposition method) include resistance heating, electron beam, highfrequency heating using e.g. microwave, and ion beam. Specific examples of a CVD method include plasma-CVD, optical CVD and thermal CVD.

Furthermore, coating by an atmospheric pressure plasma method can also be made.

When the wet coating method is used, the present surface-treating agent can be diluted with a solvent and then applied to the surface of the base material. The following solvents are preferably used from the viewpoints of stability of the present surface-treating agent and volatility of such a solvent: C₅₋₁₂ perfluoroaliphatic hydrocarbons (for example, perfluorohexane, perfluoromethyl cyclohexane, and perfluoro-1,3-dimethyl cyclohexane); polyfluoroaromatic hydrocarbons (for example, bis(trifluoromethyl)benzene); polyfluoroaliphatic hydrocarbons (for example, C₆F₁₃CH₂CH₃ (for example, Asahiklin (registered trademark) AC-6000) manufactured by Asahi Glass Co., Ltd. and 1,1,2,2,3,3,4-heptafluorocyclopentane (for example, Zeorora (registered trademark) H manufactured by Nippon Zeon Co., Ltd.); hydrofluorocarbons (HFC) (for example, 1,1,1,3,3-pentafluorobutane (HFC-365mfc)); hydrochlorofluorocarbons (for example, HCFC-225 (Asahiklin (registered trademark) AK225)); alkyl perfluoroalkyl ethers (perfluoroalkyl group and alkyl group may be linear or branched) such as hydrofluoroethers (HFE) (for example, perfluoropropyl methyl ether (C₃F₇OCH₃) (for example, Novec (trade name) 7000 manufactured by Sumitomo 3M Ltd.), perfluorobutylmethyl ether (C₄F₉OCH₃) (for example, Novec (trade name) 7100 manufactured by Sumitomo 3M Ltd.), perfluorobutylethyl ether (C₄F₉OC₂H₅) (for example, Novec (trade name) 7200 manufactured by Sumitomo 3M Ltd.), and perfluorohexyl methyl ether (C₂F₅CF (OCH₃)C₃F₇) (for example, Novec (trade name) 7300 manufactured by Sumitomo 3M Ltd.), or CF₃CH₂OCF₂CHF₂ (for example, Asahiklin (registered trademark) AE-3000) manufactured by Asahi Glass Co., Ltd.) and 1,2-dichloro-1,3,3,3-tetrafluoro-1-propene (for example, Vertrel (registered trademark) Sion manufactured by Du Pont-Mitsui Fluorochemicals Co., Ltd.). Such solvents may be used singly or as a mixture of two or more kinds combined. Furthermore, for example, such solvents can also be mixed with another solvent in order to adjust the solubility of the perfluoro(poly)ether group-containing silane compound.

When the dry coating method is used, for example, the present surface-treating agent may be subjected, as it is, to the dry coating method, or may be diluted with the solvent and then subjected to the dry coating method.

Film formation is preferably performed so that the present surface-treating agent is present together with a catalyst for hydrolysis and dehydration condensation in the film. Briefly, in the case of the wet coating method, for example, the present surface-treating agent may be diluted with the solvent and thereafter the catalyst may be added to a diluted liquid of the present surface-treating agent immediately before application to the surface of the base material. In the case of the dry coating method, for example, the present surface-treating agent, to which the catalyst is added, may be subjected, as it is, to a deposition (usually vacuum deposition) treatment, or may be subjected to a deposition (usually, the vacuum deposition) using a pellet wherein the pellet is obtained by impregnating a porous metal material such as iron or copper with the present surface-treating agent to which the catalyst has been added.

Any proper acid or base can be used for the catalyst. For example, acetic acid, formic acid, or trifluoroacetic acid can be used as an acid catalyst. For example, ammonia or an organic amine compound can be used as a base catalyst.

Next, the film is subjected to a post-treatment, if necessary. The post-treatment is not limited, and for example, may be performed by sequentially feeding water, and performing drying and heating, and more specifically may be performed as follows.

After the film of the present surface-treating agent is formed on the surface of the base material as described above, water is supplied to the film (hereinafter, also referred to as "precursor film"). The method of supplying a water content is not limited, and for example, a method such as dew condensation due to the temperature difference between the precursor coating (and base material) and the ambient atmosphere, or spraying of water vapor (steam) may be used.

Water can be supplied under an atmosphere at, for example, 0-250°C, preferably ≥ 60°C, further preferably ≥ 100°C, and preferably ≤ 180°C, further preferably ≤ 150°C. Water can be supplied in such a temperature range, thereby allowing for progression of hydrolysis. The pressure here is not limited, and can be simply ambient pressure.

Next, the precursor film is heated on the surface of the base material under a dry atmosphere at > 60°C. The drying and heating method is not limited, and for example, the precursor film together with the base material may be disposed under an atmosphere at a temperature of > 60°C, preferably > 100°C, and for example, ≤ 250°C, preferably ≤ 180°C, and at an unsaturated vapor pressure. The pressure here is not limited, and can be simply ordinary pressure.

Under such an atmosphere, groups bonding to Si after hydrolysis are mutually rapidly dehydrated and condensed between the present perfluoro(poly)ether group-containing silane compound. A group binding to Si after hydrolysis of the compound and a reactive group present in the surface of the base material are rapidly reacted between the compound and the base material, and are dehydrated and condensed when the reactive group present in the surface of the base material is a hydroxyl group. As a result, the bond between the perfluoro(poly)ether group-containing silane compound and the base material is formed.

For example, the suppling of water, and the drying and heating may be continuously performed by use of superheated water vapor.

The post-treatment can be performed as described above. Such a post-treatment can be performed in order to further increase friction durability, but it is to be noted that such a post-treatment is not essential for production of the present article. For example, the present surface-treating agent may also be applied to the surface of the base material and then left to stand as it is.

As described above, the surface-treating layer derived from the film of the present surface-treating agent is formed on the surface of the base material, and the present article is produced. The surface-treating layer thus obtained has favorable UV resistance. The surface-treating layer can have not only favorable UV resistance, but also water-repellency, oil-repellency, antifouling property (for example, prevention of attachment of contaminations such as fingerprints), surface lubricity (or lubricity, for example, wiping property of contaminations such as fingerprints, or excellent texture to fingers) and high friction durability, depending on the formulation of a composition used, and can be suitably utilized as a functional thin film.

That is, the present invention also relates to an optical material including the cured product (surface-treating layer) on the outermost layer.

Examples of the optical material preferably include not only optical materials related to e.g. a display recited below, but also various optical materials such as displays such as a cathode ray tube (CRT; e.g., TV, personal computer monitor), a liquid crystal display, a plasma display, an organic EL display, an inorganic thin-film EL dot matrix display, a rear projection display, a vacuum fluorescent display (VFD), and a field emission display (FED; Field Emission Display), and protective plates of such displays, or such protective plates each provided with a surface onto which an antireflection film is applied.

The present article is not limited, and can be an optical member. Examples of the optical member include lenses for eyeglasses; a front surface protective plate, an antireflection plate, a polarizing plate, and an anti-glare plate for displays such as PDP and LCD; a touch panel sheet for devices such as a cellular phone and a personal digital assistance; a disc surface for optical discs such as a Bluray (registered trademark) disc, a DVD disc, CD-R, and MO; and an optical fiber.

For example, the present article may be medical equipment or a medical material, or may be an in-car component.

The thickness of the surface-treating layer is not limited. In the case of an optical member, the thickness of the surface-treating layer is 1-50 nm, more preferably 1-30 nm, particularly preferably 1-15 nm from the viewpoints of optical performance, surface lubricity, friction durability, and antifouling property.

In another embodiment, another layer may be formed on the surface of the base material, and thereafter the present surface-treating layer may be formed on the surface of such the layer.

The article obtained by use of the present surface-treating agent is as described above in detail. The application, the usage method, and the production method of the article are not limited to those recited above.

### Examples

The present compound will be more specifically described with reference to the following Examples.

### (Synthesis Example 1)

To a 100-mL four-necked flask equipped with a reflux condenser, a thermometer and a stirrer, 10 g of a perfluoropolyether-modified allyl compound of the average compositional formula CF₃CF₂CF₂O(CF₂CF₂CF₂O)₂₀CF₂CF₂CH₂CH=CH₂, 10 g of 1,3-bis(trifluoromethyl)benzene, and 0.7 g of trichlorosilane were added and stirred at 5°C under a nitrogen stream for 30 minutes. Subsequently, 0.05 ml of a solution containing 2% of a Pt complex of 1,3-divinyl-1,1,3,3-tetramethyldisiloxane in xylene was added thereto, and thereafter the resultant was heated to 60°C, and stirred at that temperature for 3 hours. Thereafter, the volatile content was distilled off under reduced pressure, thereby providing 9 g of perfluoropolyether group-containing silane compound (A) having trichlorosilane at a terminal, represented by the following formula.
- Perfluoropolyether group-containing silane compound (A):

   CF₃CF₂CF₂O(CF₂CF₂CF₂O)₂₀CF₂CF₂CH₂CH₂CH₂SiCl₃

### (Synthesis Example 2)

To a 100-mL four-necked flask equipped with a reflux condenser, a thermometer and a stirrer, 9 g of perfluoropolyether group-containing trichlorosilane compound (A) having trichlorosilane at a terminal, synthesized in Synthesis Example 1, and 15 g of 1,3-bis(trifluoromethyl)benzene were added and stirred at 5°C under a nitrogen stream for 30 minutes. Subsequently, 14 ml of a solution containing 0.7 mol/L allyl magnesium bromide in diethyl ether was added thereto, and thereafter the resultant was heated to room temperature, and stirred at that temperature for 10 hours. Thereafter, the resultant was cooled to 5°C, 3 ml of methanol was added thereto, thereafter perfluorohexane was added thereto and the mixture was stirred for 30 minutes, and thereafter a perfluorohexane layer was collected by separation with a separating funnel. Subsequently, the volatile content was distilled off under reduced pressure, thereby providing 10 g of the following perfluoropolyether group-containing allyl compound (B) having an allyl group at a terminal.
- Perfluoropolyether group-containing allyl compound (B):

   CF₃CF₂CF₂O(CF₂CF₂CF₂O)₂₀CF₂CF₂CH₂CH₂CH₂Si(CH₂CH=CH₂)₃

### (Synthesis Example 3)

To a 100-mL four-necked flask equipped with a reflux condenser, a thermometer and a stirrer, 10 g of perfluoropolyether group-containing allyl compound (B) having an allyl group at a terminal, synthesized in Synthesis Example 2, 15 g of 1,3-bis(trifluoromethyl)benzene, and 3.15 g of trichlorosilane were added and stirred at 5°C under a nitrogen stream for 30 minutes. Subsequently, 0.1 ml of a solution containing 2% of a Pt complex of 1,3-divinyl-1,1,3,3-tetramethyldisiloxane in xylene was added thereto, and thereafter the resultant was heated to 60°C, and stirred at that temperature for 2 hours. Thereafter, the volatile content was distilled off under reduced pressure, thereby providing 11 g of the following perfluoropolyether group-containing trichlorosilane compound (C) having trichlorosilane at a terminal.
- Perfluoropolyether group-containing trichlorosilane compound (C):

   CF₃CF₂CF₂O(CF₂CF₂CF₂O)₂₀CF₂CF₂CH₂CH₂CH₂Si(CH₂CH₂CH₂SiCl₃)₃

### (Synthesis Example 4)

To a 100-mL four-necked flask equipped with a reflux condenser, a thermometer and a stirrer, 11 g of perfluoropolyether group-containing trichlorosilane compound (C) having trichlorosilane at a terminal, synthesized in Synthesis Example 3, and 15 g of 1,3-bis(trifluoromethyl)benzene were added and stirred at 50°C under a nitrogen stream for 30 minutes. Subsequently, a mixed solution of 0.30 g of methanol and 5.4 g of trimethyl orthoformate was added, and thereafter the resultant was heated to 55°C, and stirred at that temperature for 2 hours. Thereafter, the volatile content was distilled off under reduced pressure, thereby providing 11 g of the following perfluoropolyether group-containing silane compound (D) having a trimethoxysilyl group at a terminal.
- Perfluoropolyether group-containing silane compound (D):

   CF₃CF₂CF₂O(CF₂CF₂CF₂O)₂₀CF₂CF₂CH₂CH₂CH₂Si[CH₂CH₂CH₂Si(OCH₃)₃]₃

### (Synthesis Example 5)

To a 100-mL four-necked flask equipped with a reflux condenser, a thermometer and a stirrer, 10 g of a perfluoropolyether-modified allyl compound represented by an average compositional formula CF₃O(CF₂CF₂O)₂₀(CF₂O)₁₆CF₂CH₂CH=CH₂, 14 g of 1,3-bis(trifluoromethyl)benzene, and 1.1 g of trichlorosilane were added and stirred at 5°C under a nitrogen stream for 30 minutes. Subsequently, 0.08 ml of a solution containing 2% of a Pt complex of 1,3-divinyl-1,1,3,3-tetramethyldisiloxane in xylene was added thereto, and thereafter the resultant was heated to 60°C, stirred at that temperature for 4 hours. Thereafter, the volatile content was distilled off under reduced pressure, thereby providing 10.1 g of perfluoropolyether group-containing trichlorosilane compound (E) having trichlorosilane at a terminal, represented by the following formula.
- Perfluoropolyether group-containing trichlorosilane compound (E):

   CF₃O(CF₂CF₂O)₂₀(CF₂O)₁₆CF₂CH₂CH₂CH₂SiCl₃

### (Synthesis Example 6)

To a 100-mL four-necked flask equipped with a reflux condenser, a thermometer and a stirrer, 10.1 g of perfluoropolyether group-containing trichlorosilane compound (E) having trichlorosilane at a terminal, synthesized in Synthesis Example 5, and 14 g of 1,3-bis(trifluoromethyl)benzene were added and stirred at 5°C under a nitrogen stream for 30 minutes. Subsequently, 15.7 ml of a solution containing 1 mol/L allyl magnesium chloride in tetrahydrofuran was added thereto, and thereafter the resultant was heated to room temperature, and stirred at that temperature for 12 hours. Thereafter, the resultant was cooled to 5°C, 4.6 ml of methanol was added thereto, thereafter 20 g of perfluorohexane was added and the mixture was stirred for 30 minutes, and thereafter a perfluorohexane layer was collected by separation with a separating funnel. Subsequently, the volatile content was distilled off under reduced pressure, thereby providing 10.3 g of the following perfluoropolyether group-containing allyl compound (F) having an allyl group at a terminal.
- Perfluoropolyether group-containing allyl compound (F):

   CF₃O(CF₂CF₂O)₂₀(CF₂O)₁₆CF₂CH₂CH₂CH₂Si(CH₂CH=CH₂)₃

### (Synthesis Example 7)

To a 100-mL four-necked flask equipped with a reflux condenser, a thermometer and a stirrer, 5.5 g of perfluoropolyether group-containing allyl compound (F) having an allyl group at a terminal, synthesized in Synthesis Example 6, 8 g of 1,3-bis(trifluoromethyl)benzene, and 1.2 g of trichlorosilane were added and stirred at 5°C under a nitrogen stream for 30 minutes. Subsequently, 0.06 ml of a solution containing 2% of a Pt complex of 1,3-divinyl-1,1,3,3-tetramethyldisiloxane in xylene was added thereto, and thereafter the resultant was heated to 60°C, and stirred at that temperature for 2 hours. Thereafter, the volatile content was distilled off under reduced pressure, thereby providing 5.6 g of the following perfluoropolyether group-containing trichlorosilane compound (G) having trichlorosilane at a terminal.
- Perfluoropolyether group-containing trichlorosilane compound (G):

   CF₃O(CF₂CF₂O)₂₀(CF₂O)₁₆CF₂CH₂CH₂CH₂Si(CH₂CH₂CH₂SiCl₃)₃

### (Synthesis Example 8)

To a 100-mL four-necked flask equipped with a reflux condenser, a thermometer and a stirrer, 5.6 g of perfluoropolyether group-containing trichlorosilane compound (G) having trichlorosilane at a terminal, synthesized in Synthesis Example 7, and 9 g of 1,3-bis(trifluoromethyl)benzene were added and stirred at 50°C under a nitrogen stream for 30 minutes. Subsequently, a mixed solution of 0.2 g of methanol and 5.8 g of trimethyl orthoformate was added, and thereafter the resultant was heated to 55°C, and stirred at that temperature for 3 hours. Thereafter, the volatile content was distilled off under reduced pressure, thereby providing 5.7 g of the following perfluoropolyether group-containing silane compound (H) having a trimethoxysilyl group at a terminal.
- Perfluoropolyether group-containing silane compound (H):

   CF₃O(CF₂CF₂O)₂₀(CF₂O)₁₆CF₂CH₂CH₂CH₂Si[CH₂CH₂CH₂Si(OCH₃)₃]₃

### (Synthesis Example 9)

To a 100-mL four-necked flask equipped with a reflux condenser, a thermometer and a stirrer, 9 g of perfluoropolyether group-containing silane compound (A) having trichlorosilane at a terminal, synthesized in Synthesis Example 1, and 15 g of 1,3-bis(trifluoromethyl)benzene were added and stirred at 5°C under a nitrogen stream for 30 minutes. Subsequently, 10 ml of a solution containing 1.6 mol/L vinyl magnesium chloride in tetrahydrofuran was added thereto, and thereafter the resultant was heated to room temperature, and stirred at that temperature for 10 hours. Thereafter, the resultant was cooled to 5°C, 5 ml of methanol was added thereto, thereafter perfluorohexane was added thereto and the mixture was stirred for 30 minutes, and thereafter a perfluorohexane layer was collected by separation with a separating funnel. Subsequently, the volatile content was distilled off under reduced pressure, thereby providing 9.1 g of the following perfluoropolyether group-containing vinyl compound (I) having a vinyl group at a terminal.
- Perfluoropolyether group-containing vinyl compound (I):

   CF₃CF₂CF₂O(CF₂CF₂CF₂O)₂₀CF₂CF₂CH₂CH₂CH₂Si(CH=CH₂)₃

### (Synthesis Example 10)

To a 100-mL four-necked flask equipped with a reflux condenser, a thermometer and a stirrer, 9.1 g of perfluoropolyether group-containing vinyl compound (I) having a vinyl group at a terminal, synthesized in Synthesis Example 9, 12 g of 1,3-bis(trifluoromethyl)benzene, and 3.0 g of trichlorosilane were added and stirred at 5°C under a nitrogen stream for 30 minutes. Subsequently, 0.1 ml of a solution containing 2% of a Pt complex of 1,3-divinyl-1,1,3,3-tetramethyldisiloxane in xylene was added thereto, and thereafter the resultant was heated to 60°C, and stirred at that temperature for 3 hours. Thereafter, the volatile content was distilled off under reduced pressure, thereby providing 9.2 g of the following perfluoropolyether group-containing trichlorosilane compound (J) having trichlorosilane at a terminal.
- Perfluoropolyether group-containing trichlorosilane compound (J):

   CF₃CF₂CF₂O(CF₂CF₂CF₂O)₂₀CF₂CF₂CH₂CH₂CH₂Si(CH₂CH₂SiCl₃)₃

### (Synthesis Example 11)

To a 100-mL four-necked flask equipped with a reflux condenser, a thermometer and a stirrer, 9.2 g of perfluoropolyether group-containing trichlorosilane compound (J) having trichlorosilane at a terminal, synthesized in Synthesis Example 10, and 12 g of 1,3-bis(trifluoromethyl)benzene were added and stirred at 50°C under a nitrogen stream for 30 minutes. Subsequently, a mixed solution of 0.40 g of methanol and 13.2 g of trimethyl orthoformate was added, and thereafter the resultant was heated to 55°C, and stirred at that temperature for 3 hours. Thereafter, the volatile content was distilled off under reduced pressure, thereby providing 9.3 g of the following perfluoropolyether group-containing silane compound (K) having a trimethoxysilyl group at a terminal.
- Perfluoropolyether group-containing silane compound (K):

   CF₃CF₂CF₂O(CF₂CF₂CF₂O)₂₀CF₂CF₂CH₂CH₂CH₂Si[CH₂CH₂Si(OCH₃)₃]₃

### (Synthesis Example 12)

To a 100-mL four-necked flask equipped with a reflux condenser, a thermometer and a stirrer, 10.1 g of perfluoropolyether group-containing trichlorosilane compound (E) having trichlorosilane at a terminal, synthesized in Synthesis Example 5, and 12 g of 1,3-bis(trifluoromethyl)benzene were added and stirred at 5°C under a nitrogen stream for 30 minutes. Subsequently, 9.5 ml of a solution containing 1.6 mol/L vinyl magnesium chloride in tetrahydrofuran was added thereto, and thereafter the resultant was heated to room temperature, and stirred at that temperature for 12 hours. Thereafter, the resultant was cooled to 5°C, 6 ml of methanol was added thereto, thereafter 20 g of perfluorohexane was added thereto and the mixture was stirred for 30 minutes, and thereafter a perfluorohexane layer was collected by separation with a separating funnel. Subsequently, the volatile content was distilled off under reduced pressure, thereby providing 10.2 g of the following perfluoropolyether group-containing vinyl compound (L) having a vinyl group at a terminal.
- Perfluoropolyether group-containing vinyl compound (L):

   CF₃O(CF₂CF₂O)₂₀(CF₂O)₁₆CF₂CH₂CH₂CH₂Si(CH=CH₂)₃

### (Synthesis Example 13)

To a 100-mL four-necked flask equipped with a reflux condenser, a thermometer and a stirrer, 6.0 g of perfluoropolyether group-containing vinyl compound (L) having a vinyl group at a terminal, synthesized in Synthesis Example 12, 9 g of 1,3-bis(trifluoromethyl)benzene, and 1.5 g of trichlorosilane were added and stirred at 5°C under a nitrogen stream for 30 minutes. Subsequently, 0.06 ml of a solution containing 2% of a Pt complex of 1,3-divinyl-1,1,3,3-tetramethyldisiloxane in xylene was added thereto, and thereafter the resultant was heated to 60°C, and stirred at that temperature for 2 hours. Thereafter, the volatile content was distilled off under reduced pressure, thereby providing 6.1 g of the following perfluoropolyether group-containing trichlorosilane compound (M) having trichlorosilane at a terminal.
- Perfluoropolyether group-containing trichlorosilane compound (M):

   CF₃O(CF₂CF₂O)₂₀(CF₂O)₁₆CF₂CH₂CH₂CH₂Si(CH₂CH₂SiCl₃)₃

### (Synthesis Example 14)

To a 100-mL four-necked flask equipped with a reflux condenser, a thermometer and a stirrer, 6.1 g of perfluoropolyether group-containing trichlorosilane compound (M) having trichlorosilane at a terminal, synthesized in Synthesis Example 13, and 9 g of 1,3-bis(trifluoromethyl)benzene were added and stirred at 50°C under a nitrogen stream for 30 minutes. Subsequently, a mixed solution of 0.25 g of methanol and 8.3 g of trimethyl orthoformate was added, and thereafter the resultant was heated to 55°C, and stirred at that temperature for 3 hours. Thereafter, the volatile content was distilled off under reduced pressure, thereby providing 6.2 g of the following perfluoropolyether group-containing silane compound (N) having a trimethoxysilyl group at a terminal.
- Perfluoropolyether group-containing silane compound (N):

   CF₃O(CF₂CF₂O)₂₀(CF₂O)₁₆CF₂CH₂CH₂CH₂Si[CH₂CH₂Si(OCH₃)₃]₃

### (Synthesis Example 15)

To a 100-mL four-necked flask equipped with a reflux condenser, a thermometer and a stirrer, 10.0 g of perfluoropolyether group-containing trichlorosilane compound (E) having trichlorosilane at a terminal, synthesized in Synthesis Example 5, and 12 g of 1,3-bis(trifluoromethyl)benzene were added and stirred at 5°C under a nitrogen stream for 30 minutes. Subsequently, 16.5 ml of a solution containing 1.0 mol/L butenyl magnesium bromide in tetrahydrofuran was added thereto, and thereafter the resultant was heated to room temperature, and stirred at that temperature for 12 hours. Thereafter, the resultant was cooled to 5°C, 6 ml of methanol was added thereto, thereafter 20 g of perfluorohexane was added thereto and the mixture was stirred for 30 minutes, and thereafter a perfluorohexane layer was collected by separation with a separating funnel. Subsequently, the volatile content was distilled off under reduced pressure, thereby providing 10.1 g of the following perfluoropolyether group-containing butenyl compound (O) having a butenyl group at a terminal.
- Perfluoropolyether group-containing butenyl compound (O):

   CF₃O(CF₂CF₂O)₂₀(CF₂O)₁₆CF₂CH₂CH₂CH₂Si(CH₂CH₂CH=CH₂)₃

### (Synthesis Example 16)

To a 100-mL four-necked flask equipped with a reflux condenser, a thermometer and a stirrer, 6.0 g of perfluoropolyether group-containing butenyl compound (O) having a butenyl group at a terminal, synthesized in Synthesis Example 15, 9 g of 1,3-bis(trifluoromethyl)benzene, and 1.5 g of trichlorosilane were added and stirred at 5°C under a nitrogen stream for 30 minutes. Subsequently, 0.06 ml of a solution containing 2% of a Pt complex of 1,3-divinyl-1,1,3,3-tetramethyldisiloxane in xylene was added thereto, and thereafter the resultant was heated to 60°C, and stirred at that temperature for 2 hours. Thereafter, the volatile content was distilled off under reduced pressure, thereby providing 6.1 g of the following perfluoropolyether group-containing trichlorosilane compound (P) having trichlorosilane at a terminal.
- Perfluoropolyether group-containing trichlorosilane compound (P):

   CF₃O(CF₂CF₂O)₂₀(CF₂O)₁₆CF₂CH₂CH₂CH₂Si(CH₂CH₂CH₂CH₂SiCl₃)₃

### (Synthesis Example 17)

To a 100-mL four-necked flask equipped with a reflux condenser, a thermometer and a stirrer, 6.1 g of perfluoropolyether group-containing trichlorosilane compound (P) having trichlorosilane at a terminal, synthesized in Synthesis Example 16, and 9 g of 1,3-bis(trifluoromethyl)benzene were added and stirred at 50°C under a nitrogen stream for 30 minutes. Subsequently, a mixed solution of 0.25 g of methanol and 8.3 g of trimethyl orthoformate was added, and thereafter the resultant was heated to 55°C, and stirred at that temperature for 3 hours. Thereafter, the volatile content was distilled off under reduced pressure, thereby providing 6.2 g of the following perfluoropolyether group-containing silane compound (Q) having a trimethoxysilyl group at a terminal.
- Perfluoropolyether group-containing silane compound (Q):

   CF₃O(CF₂CF₂O)₂₀(CF₂O)₁₆CF₂CH₂CH₂CH₂Si[CH₂CH₂CH₂CH₂Si(OCH₃)₃]₃

### (Synthesis Example 18)

To a 100-mL four-necked flask equipped with a reflux condenser, a thermometer and a stirrer, 10.0 g of perfluoropolyether group-containing trichlorosilane compound (E) having trichlorosilane at a terminal, synthesized in Synthesis Example 5, and 12 g of 1,3-bis(trifluoromethyl)benzene were added and stirred at 5°C under a nitrogen stream for 30 minutes. Subsequently, 16.5 ml of a solution containing 1.0 mol/L hexenyl magnesium bromide in tetrahydrofuran was added thereto, and thereafter the resultant was heated to room temperature, and stirred at that temperature for 12 hours. Thereafter, the resultant was cooled to 5°C, 6 ml of methanol was added thereto, thereafter 20 g of perfluorohexane was added thereto and the mixture was stirred for 30 minutes, and thereafter a perfluorohexane layer was collected by separation with a separating funnel. Subsequently, the volatile content was distilled off under reduced pressure, thereby providing 10.1 g of the following perfluoropolyether group-containing hexenyl compound (R) having a hexenyl group at a terminal.
- Perfluoropolyether group-containing hexenyl compound (R):

   CF₃O(CF₂CF₂O)₂₀(CF₂O)₁₆CF₂CH₂CH₂CH₂Si(CH₂CH₂CH₂CH₂CH=CH₂)₃

### (Synthesis Example 19)

To a 100-mL four-necked flask equipped with a reflux condenser, a thermometer and a stirrer, 6.0 g of perfluoropolyether group-containing hexenyl compound (R) having a hexenyl group at a terminal, synthesized in Synthesis Example 18, 9 g of 1,3-bis(trifluoromethyl)benzene, and 1.5 g of trichlorosilane were added and stirred at 5°C under a nitrogen stream for 30 minutes. Subsequently, 0.06 ml of a solution containing 2% of a Pt complex of 1,3-divinyl-1,1,3,3-tetramethyldisiloxane in xylene was added thereto, and thereafter the resultant was heated to 60°C, and stirred at that temperature for 2 hours. Thereafter, the volatile content was distilled off under reduced pressure, thereby providing 6.1 g of the following perfluoropolyether group-containing trichlorosilane compound (S) having trichlorosilane at a terminal.
- Perfluoropolyether group-containing trichlorosilane compound (S):

   CF₃O(CF₂CF₂O)₂₀(CF₂O)₁₆CF₂CH₂CH₂CH₂Si(CH₂CH₂CH₂CH₂CH₂CH₂SiCl₃)₃

### (Synthesis Example 20)

To a 100-mL four-necked flask equipped with a reflux condenser, a thermometer and a stirrer, 6.1 g of perfluoropolyether group-containing trichlorosilane compound (S) having trichlorosilane at a terminal, synthesized in Synthesis Example 19, and 9 g of 1,3-bis(trifluoromethyl)benzene were added and stirred at 50°C under a nitrogen stream for 30 minutes. Subsequently, a mixed solution of 0.25 g of methanol and 8.3 g of trimethyl orthoformate was added, and thereafter the resultant was heated to 55°C, and stirred at that temperature for 3 hours. Thereafter, the volatile content was distilled off under reduced pressure, thereby providing 6.2 g of the following perfluoropolyether group-containing silane compound (T) having a trimethoxysilyl group at a terminal.
- Perfluoropolyether group-containing silane compound (T):

   CF₃O(CF₂CF₂O)₂₀(CF₂O)₁₆CF₂CH₂CH₂CH₂Si[CH₂CH₂CH₂CH₂CH₂CH₂Si (OCH₃)₃]₃

### (Synthesis Example 21)

To a 100-mL four-necked flask equipped with a reflux condenser, a thermometer and a stirrer, 13 g of a perfluoropolyether-modified allyl compound represented by an average compositional formula CF₃O(CF₂CF₂O)₂₁(CF₂O)₂₉CF₂CH₂CH=CH₂, 15.6 g of 1,3-bis(trifluoromethyl)benzene, and 1.3 g of trichlorosilane were added and stirred at 5°C under a nitrogen stream for 30 minutes. Subsequently, 0.10 ml of a solution containing 2% of a Pt complex of 1,3-divinyl-1,1,3,3-tetramethyldisiloxane in xylene was added thereto, and thereafter the resultant was heated to 60°C, and stirred at that temperature for 4 hours. Thereafter, the volatile content was distilled off under reduced pressure, thereby providing 13.2 g of perfluoropolyether group-containing trichlorosilane compound (U) having trichlorosilane at a terminal, represented by the following formula.
- Perfluoropolyether group-containing trichlorosilane compound (U):

   CF₃O(CF₂CF₂O)₂₁(CF₂O)₂₉CF₂CH₂CH₂CH₂SiCl₃

### (Synthesis Example 22)

To a 100-mL four-necked flask equipped with a reflux condenser, a thermometer and a stirrer, 13.2 g of perfluoropolyether group-containing trichlorosilane compound (U) having trichlorosilane at a terminal, synthesized in Synthesis Example 21, and 15.6 g of 1,3-bis(trifluoromethyl)benzene were added and stirred at 5°C under a nitrogen stream for 30 minutes. Subsequently, 17.8 ml of a solution containing 1 mol/L allyl magnesium chloride in tetrahydrofuran was added thereto, and thereafter the resultant was heated to room temperature, and stirred at that temperature for 12 hours. Thereafter, the resultant was cooled to 5°C, 7.1 ml of methanol was added thereto, thereafter 30 g of perfluorohexane was added thereto and the mixture was stirred for 30 minutes, and thereafter a perfluorohexane layer was collected by separation with a separating funnel. Subsequently, the volatile content was distilled off under reduced pressure, thereby providing 13.0 g of the following perfluoropolyether group-containing allyl compound (V) having an allyl group at a terminal.
- Perfluoropolyether group-containing allyl compound (V):

   CF₃O(CF₂CF₂O)₂₁(CF₂O)₂₉CF₂CH₂CH₂CH₂Si(CH₂CH=CH₂)₃

### (Synthesis Example 23)

To a 100-mL four-necked flask equipped with a reflux condenser, a thermometer and a stirrer, 12.5 g of perfluoropolyether group-containing allyl compound (V) having an allyl group at a terminal, synthesized in Synthesis Example 22, 17.3 g of 1,3-bis(trifluoromethyl)benzene, and 2.5 g of trichlorosilane were added and stirred at 5°C under a nitrogen stream for 30 minutes. Subsequently, 0.17 ml of a solution containing 2% of a Pt complex of 1,3-divinyl-1,1,3,3-tetramethyldisiloxane in xylene was added thereto, and thereafter the resultant was heated to 60°C, and stirred at that temperature for 2 hours. Thereafter, the volatile content was distilled off under reduced pressure, thereby providing 12.6 g of the following perfluoropolyether group-containing trichlorosilane compound (W) having trichlorosilane at a terminal.
- Perfluoropolyether group-containing trichlorosilane compound (W):

   CF₃O(CF₂CF₂O)₂₁(CF₂O)₂₉CF₂CH₂CH₂CH₂Si(CH₂CH₂CH₂SiCl₃)₃

### (Synthesis Example 24)

To a 100-mL four-necked flask equipped with a reflux condenser, a thermometer and a stirrer, 12.6 g of perfluoropolyether group-containing trichlorosilane compound (W) having trichlorosilane at a terminal, synthesized in Synthesis Example 23, and 17 g of 1,3-bis(trifluoromethyl)benzene were added and stirred at 50°C under a nitrogen stream for 30 minutes. Subsequently, a mixed solution of 0.4 g of methanol and 13.3 g of trimethyl orthoformate was added, and thereafter the resultant was heated to 55°C, and stirred at that temperature for 3 hours. Thereafter, the volatile content was distilled off under reduced pressure, thereby providing 12.7 g of the following perfluoropolyether group-containing silane compound (X) having a trimethoxysilyl group at a terminal.
- Perfluoropolyether group-containing silane compound (X):

   CF₃O(CF₂CF₂O)₂₁(CF₂O)₂₉CF₂CH₂CH₂CH₂Si[CH₂CH₂CH₂Si(OCH₃)₃]₃

### (Example 1)

Compound (D) obtained in Synthesis Example 4 was dissolved in hydrofluoroether (NOVEC HFE 7200 manufactured by 3M) so that the concentration was 20 wt%, thereby preparing surface-treating agent 1.

Surface-treating agent 1 prepared above was vapor-deposited on chemically reinforced glass ("Gorilla" glass having a thickness of 0.7 mm, manufactured by Corning Incorporated,). Such a vacuum deposition treatment was at a pressure of 3.0 × 10⁻³ Pa. First, silicon dioxide at a thickness of 7 nm was deposited on the surface of the chemically reinforced glass to form a silicon dioxide film, and subsequently 2 mg of a surface-treating agent (namely, containing 0.4 mg of compound (D)) per the chemically reinforced glass (55 mm × 100 mm) was deposited. Thereafter, the chemically reinforced glass with a deposited film was left to still stand under an atmosphere of a temperature of 20°C and a humidity of 65% for 24 hours. Thus, the deposited film was cured, thereby forming a surface-treating layer.

### (Example 2)

A surface-treating agent was prepared and a surface-treating layer was formed in the same manner as in Example 1 except that compound (H) was used instead of compound (D).

### (Examples 3 to 4)

Each surface-treating agent was prepared and each surface-treating layer was formed in the same manner as in Example 1 except that compound (K) or compound (N) was used instead of compound (D).

### (Examples 5 and 6)

Each surface-treating agent was prepared and each surface-treating layer was formed in the same manner as in Example 1 except that compound (Q) or compound (T) was used instead of compound (D).

### (Example 7)

A surface-treating agent was prepared and a surface-treating layer was formed in the same manner as in Example 1 except that compound (X) was used instead of compound (D).

### (Comparative Example 1)

A surface-treating agent was prepared and a surface-treating layer was formed in the same manner as in Example 1 except that the following control compound 1 was used instead of compound (D).
- Control compound 1

   CF₃CF₂CF₂O(CF₂CF₂CF₂O)₂₀CF₂CF₂CH₂OCH₂CH₂CH₂Si[CH₂CH₂CH₂Si (OCH₃)₃]₃

### (Comparative Example 2)

A surface-treating agent was prepared and a surface-treating layer was formed in the same manner as in Example 1 except that the following control compound 2 was used instead of compound (D).
- Control compound 2

   CF₃O(CF₂CF₂O)₂₀(CF₂O)₁₆CF₂CH₂OCH₂CH₂CH₂Si [CH₂CH₂CH₂Si(OCH ₃)₃]₃

### (Evaluation of UV resistance)

The static contact angle of water with each of the surface-treating layers formed in Examples and Comparative Examples was measured before and after UV irradiation. UV irradiation was conducted by using a UVB-313 lamp (manufactured by Q-Lab Corporation, irradiance at 310 nm: 0.63 W/m²) at a distance of 5 cm between the lamp and the surface-treating layer. The static contact angle of water was measured with respect to 1 µL of water by using a contact angle measurement apparatus (manufactured by Kyowa Interface Science, Inc.).

First, the static contact angle of water with each of the formed surface-treating layers before UV irradiation (UV irradiation time: 0 hours) was measured as the initial evaluation. Thereafter, the static contact angle of water with each of the formed surface-treating layers after UV irradiation for a predetermined time was measured. The evaluation of UV resistance was performed for a cumulative irradiation time of 96 hours. The results are shown in Table 1.

**[Table 1]**

| Cumulative UV irradiation time (hours) | Contact angle (degrees) | | | | | | | | |
|---|---|---|---|---|---|---|---|---|---|
| | Example 1 | Example 2 | Example 3 | Example 4 | Example 5 | Example 6 | Example 7 | Comparative Example 1 | Comparative Example 2 |
| 0 | 116 | 116 | 116 | 116 | 116 | 115 | 116 | 116 | 116 |
| 24 | 116 | 115 | 116 | 116 | 115 | 115 | 115 | 115 | 116 |
| 48 | 115 | 115 | 115 | 115 | 115 | 115 | 115 | 104 | 108 |
| 72 | 115 | 115 | 115 | 115 | 114 | 114 | 115 | 94 | 97 |
| 96 | 115 | 115 | 115 | 115 | 114 | 114 | 114 | 86 | 84 |

### (Evaluation of friction durability)

Each of the surface-treating layers formed in Examples 1-7 and Comparative Examples 1 and 2 was subjected to the following friction durability test as the evaluation of durability in practical use.

The static contact angle of water of the surface of the surface-treating layer of which the surface had not still contacted with anything after formation thereof (number of times of friction: zero), was measured as the initial evaluation.

Thereafter, a sample article on which each of the surface-treating layers was formed was horizontally disposed, the following friction block was brought into contact with the surface of each of the surface-treating layers (the contact surface had a circular shape having a diameter of 1 cm), a load of 5 N was applied thereon, and thereafter the friction block was allowed to reciprocate at a rate of 40 mm/sec with the load being applied. The friction block was allowed to reciprocate at most 4000 times, and the static contact angle of water (degrees) was measured every number of times of reciprocation (number of times of friction) of 1000. The test was stopped when the measurement value of the static contact angle of water was decreased to < 60 degrees. The static contact angle of water was measured in the same manner as in the evaluation of UV resistance. The results are shown in Table 2 (the sign "-" in the Table means no measurement).

### • Friction block

A silicone rubber product shown below, the surface (diameter: 1 cm) of which was covered with a cotton impregnated with artificial sweat having the following composition, was used as a friction block.

### • Composition of artificial sweat

Anhydrous disodium hydrogen phosphate: 2 g
Sodium chloride: 20 g
85% Lactic acid: 2 g
Histidine hydrochloride: 5 g
Distilled water: 1 kg

### • Silicone rubber product

Silicone rubber plug SR-51 manufactured by Tigers Polymer Corporation, processed into a cylinder shape having a diameter of 1 cm and a thickness of 1 cm.

**[Table 2]**

| Number of times of friction (times) | Contact angle (degrees) | | | | | | | | |
|---|---|---|---|---|---|---|---|---|---|
| | Example 1 | Example 2 | Example 3 | Example 4 | Example 5 | Example 6 | Example 7 | Comparative Example 1 | Comparative Example 2 |
| 0 | 116 | 116 | 116 | 116 | 115 | 115 | 116 | 116 | 116 |
| 1000 | 109 | 112 | 111 | 113 | 110 | 109 | 113 | 89 | 105 |
| 2000 | 104 | 108 | 107 | 111 | 106 | 102 | 110 | 80 | 89 |
| 3000 | 96 | 102 | 101 | 107 | 101 | 96 | 105 | 58 | 62 |
| 4000 | 92 | 99 | 95 | 103 | 94 | 86 | 101 | - | 54 |

It was found from the results in Table 1 that the surface-treating layers of Examples 1-7 were suppressed in a decrease in the contact angle due to UV irradiation as compared with the surface-treating layers of Comparative Examples 1 and 2. The reason for this was considered because the surface-treating layers formed in Examples 1-7 were suppressed in decomposition of the surface-treating layers due to UV irradiation. In other words, it has been confirmed that the surface-treating layer formed by use of the present compound, having a linker made of only an alkylene group, is enhanced in UV resistance.

It was found from the results in Table 2 that the surface-treating layers of Examples 1-7 were suppressed in a decrease in the contact angle and had excellent friction durability. The reason for this was considered because the surface-treating layers of Examples 1-7 were suppressed in degradation due to chemicals and furthermore the surface-treating layers were enhanced in friction resistance due to PFPE chains closely oriented owing to a surface-treating agent having an alkylene group as a linker (namely, X). In other words, it has been confirmed that the surface-treating layer formed by use of the present compound, having a linker made of only an alkylene group, is enhanced in chemical resistance and abrasion resistance.

The e/f ratio of compound (H) contained in the surface-treating agent in Example 2 was 1.25, and the e/f ratio of compound (X) contained in the surface-treating agent of Example 7 was 0.72. It was considered that compound (X) contained in the surface-treating agent in Example 7 was lower in the content of a (CF₂CF₂O) unit than the content of a (CF₂O) unit and therefore the surface-treating layer formed was easily slid to result in a further enhancement in friction durability.

### Industrial Applicability

The present invention can be suitably utilized for forming a surface-treating layer on surfaces of various base materials, in particular, on a surface of an optical member required to have permeability.

## Claims

1. A compound, which is a perfluoro(poly)ether group-containing silane compound of formula (A1) or (A2):
Rf-PFPE-X-SiR^{a}₃ (A1)
R^{a}₃Si-X-PFPE-X-SiR^{a}₃ (A2)
wherein
PFPE is a group of the formula:
-(OC₆F₁₂)*ₐ*-(OC₅F₁₀)*_{b}*-(OC₄F₈)*_{c}*-(OC₃F₆)*_{d}*-(OC₂F₄)*ₑ*-(OCF₂)*_{f}*-
wherein a to f each independently are an integer of 0-200, (*a*+*b*+*c*+*d*+*e*+*f*) is ≥ 1, and the occurrence order of the repeating units in parentheses with the indices *a-f* is not limited;
Rf is C₁₋₁₆-alkyl optionally substituted with one or more F;
X each independently is optionally substituted C₂₋₂₀-alkylene;
R^{a} each independently is -Z-SiR¹*ₚ*R²*_{q}*R³*ᵣ*, wherein
Z each independently is O or a divalent organic group;
R¹ each independently is R^{a}' which has the same definition as R^{a};
the number of Si atoms linearly linked via Z group in R^{a} is ≤ 5;
R² each independently is OH or a hydrolyzable group;
R³ each independently is H or lower alkyl;
*p* each independently is an integer of 0-3;
*q* each independently is an integer of 0-3; and
*r* each independently is an integer of 0-3;
provided that (p+q+r) = 3 in each -Z-SiR¹ₚR²_{q}R³ᵣ, and two or more Si atoms having at least one R² are present in the formulae (A1) and (A2).

2. The compound of claim 1, wherein X is unsubstituted C₂₋₁₀-alkylene.

3. The compound of claim 1 or 2, wherein Z is alkylene.

4. The compound of any of claims 1-3, wherein the number of Si atoms linearly linked via Z group in R^{a} is 1 or 2, and preferably is 1.

5. The compound of any of claims 1-4, wherein Rf is C₁₋₁₆-perfluoroalkyl.

6. The compound of any of claims 1-5, wherein PFPE is a group of formula (a), (b) or (c):
-(OC₃F₆)*_{d}*- (a)
wherein d is an integer of 1-200;
-(OC₄F₈)*_{c}*-(OC₃F₆)*_{d}*-(OC₂F₄)*ₑ*-(OCF₂)*_{f}*- (b)
wherein
*c*, d each independently are an integer of 0-30;
*e*, *f* each independently are an integer of 1-200; and (*c*+*d*+*e*+*f*) is an integer of 10-200; and the occurrence order of the repeating units in parentheses with the indices *c* to *f* is not limited;
-(R⁶-R⁷)*ⱼ*- (c)
wherein
R⁶ is OCF₂ or OC₂F₄;
R⁷ is OC₂F₄, OC₃F₆, OC₄F₈, OC₅F₁₀, OC₆F₁₂ or a combination of two or three groups thereof; and
j is an integer of 2-100.

7. The compound of claim 6, wherein Rf is C₁₋₁₆-perfluoroalkyl, X is unsubstituted linear C₂₋₁₀-alkylene, and q is 3.

8. A surface-treating agent comprising at least one compound of any of claims 1-7.

9. The surface-treating agent of claim 8, further comprising one or more other components selected from a fluorine-containing oil, a silicone oil, an alcohol, a catalyst, a transition metal, a halide ion, and a compound containing an atom having an unshared electron pair in a molecular structure.

10. The surface-treating agent of claim 9, further comprising a solvent.

11. The use of the surface-treating agent of any of claims 8-10 as an antifouling coating agent or a water-proof coating agent.

12. A pellet comprising the surface-treating agent of any of claims 8-10.

13. An article comprising a base material and, on the surface thereof, a layer formed from the compound of any of claims 1-7 or the surface-treating agent of any of claims 8-10.

14. The article of claim 13, which is an optical member or a display.

## Patentansprüche

1. Verbindung, die eine Perfluor(poly)ethergruppen-haltige Silanverbindung der Formel (A1) oder (A2) ist:
Rf-PFPE-X-SiR^{a}₃ (A1)
R^{a}₃Si-X-PFPE-X-SiR^{a}₃ (A2)
worin
PFPE eine Gruppe der Formel:
-(OC₆F₁₂)*ₐ*-(OC₅F₁₀)*_{b}*-(OC₄F₈)*_{c}*-(OC₃F₆)*_{d}*-(OC₂F₄)*ₑ*-(OCF₂)*_{f}*-
ist, worin a bis f jeweils unabhängig eine ganze Zahl von 0-200 sind, (*a*+*b*+*c*+*d*+*e*+*f*) ≥ 1 ist und die Reihenfolge des Auftretens der Wiederholungseinheiten in Klammern mit den Indizes *a-f* nicht begrenzt ist;
Rf C₁₋₁₆-Alkyl ist, das gegebenenfalls mit einem oder mehreren F substituiert ist;
X jeweils unabhängig gegebenenfalls substituiertes C₂₋₂₀-Alkylen ist;
R^{a} jeweils unabhängig -Z-SiR¹*ₚ*R²*_{q}*R³*ᵣ* ist, worin
Z jeweils unabhängig O oder eine zweiwertige organische Gruppe ist;
R¹ jeweils unabhängig R^{a}' ist, das die gleiche Definition wie R^{a} hat;
die Anzahl der Si-Atome, die linear über eine Z-Gruppe in R^{a} verbunden sind, ≤ 5 ist;
R² jeweils unabhängig OH oder eine hydrolysierbare Gruppe ist;
R³ jeweils unabhängig H oder Niederalkyl ist;
p jeweils unabhängig eine ganze Zahl von 0-3 ist;
*q* jeweils unabhängig eine ganze Zahl von 0-3 ist; und
r jeweils unabhängig eine ganze Zahl von 0-3 ist;
vorausgesetzt, dass (p+q+r) = 3 in jedem -Z-SiR¹ₚR²_{q}R³ᵣ, und zwei oder mehrere Si-Atome, die mindestens ein R² aufweisen, in den Formeln (A1) und (A2) vorhanden sind.

2. Verbindung gemäß Anspruch 1, worin X unsubstituiertes C₂₋₁₀-Alkylen ist.

3. Verbindung gemäß Anspruch 1 oder 2, worin Z Alkylen ist.

4. Verbindung gemäß einem der Ansprüche 1-3, worin die Anzahl der Si-Atome, die linear über eine Z-Gruppe in R^{a} verbunden sind, 1 oder 2 ist, und vorzugsweise 1 ist.

5. Verbindung gemäß einem der Ansprüche 1-4, worin Rf C₁₋₁₆-Perfluoralkyl ist.

6. Verbindung gemäß einem der Ansprüche 1-5, worin PFPE eine Gruppe der Formel (a), (b) oder (c) ist:
-(OC₃F₆)*_{d}*- (a)
worin d eine ganze Zahl von 1-200 ist;
-(OC₄F₈)*_{c}*-(OC₃F₆)*_{d}*-(OC₂F₄)*ₑ*-(OCF₂)*_{f}*- (b)
worin
c, d jeweils unabhängig eine ganze Zahl von 0-30 sind;
e, *f* jeweils unabhängig eine ganze Zahl von 1-200 sind; und (c+d+e+f) eine ganze Zahl von 10-200 ist; und die Reihenfolge des Auftretens der Wiederholungseinheiten in Klammern mit den Indizes a bis f nicht begrenzt ist;
-(R⁶-R⁷)*ⱼ*- (c)
worin
R⁶ OCF₂ oder OC₂F₄ ist;
R⁷ OC₂F₄, OC₃F₆, OC₄F₈, OC₅F₁₀, OC₆F₁₂ oder eine Kombination von zwei oder drei Gruppen davon ist; und
j eine ganze Zahl von 2-100 ist.

7. Verbindung gemäß Anspruch 6, worin Rf C₁₋₁₆-Perfluoralkyl ist, X unsubstituiertes lineares C₂₋₁₀-Alkylen ist und q 3 ist.

8. Oberflächenbehandlungsmittel, umfassend mindestens eine Verbindung gemäß der Ansprüche 1-7.

9. Oberflächenbehandlungsmittel gemäß Anspruch 8, ferner umfassend eine oder mehrere Komponenten, ausgewählt aus einem fluorhaltigen Öl, einem Silikonöl, einem Alkohol, einem Katalysator, einem Übergangsmetall, einem Halogenidion und einer Verbindung, die ein Atom mit einem ungeteilten Elektronenpaar in einer Molekülstruktur enthält.

10. Oberflächenbehandlungsmittel gemäß Anspruch 9, ferner umfassend ein Lösungsmittel.

11. Verwendung des Oberflächenbehandlungsmittels gemäß einem der Ansprüche 8-10 als Antifouling-Beschichtungsmittel oder wasserabweisendes Beschichtungsmittel.

12. Pellet, umfassend das Oberflächenbehandlungsmittel gemäß einem der Ansprüche 8-10.

13. Gegenstand, umfassend ein Basismaterial und, auf dessen Oberfläche, eine Schicht, die aus der Verbindung gemäß einem der Ansprüche 1-7 oder dem Oberflächenbehandlungsmittel gemäß einem der Ansprüche 8-10 gebildet ist.

14. Gegenstand gemäß Anspruch 13, der ein optisches Element oder ein Display ist.

## Revendications

1. Composé, qui est un composé de silane contenant un groupe perfluoro(poly)éther de formule (A1) ou (A2) :
Rf-PFPE-X-SiR^{a}₃ (A1)
R^{a}₃Si-X-PFPE-X-SiR^{a}₃ (A2)
dans lequel
PFPE est un groupe de la formule:
-(OC₆F₁₂)*ₐ*-(OC₅F₁₀)_{b}-(OC*₄*F₈)_{c}-(OC*₃*F₆)*_{d}*-(OC₂F₄)*ₑ*-(OCF₂)*_{f}*-
dans lequel a à f sont chacun indépendamment un nombre entier de 0 à 200, *(a*+*b*+*c*+*d*+*e*+*f)* est ≥ 1, et l'ordre des motifs répétitifs entre parenthèses avec les indices *a-f* n'est pas limité ;
Rf est un alkyle en C₁₋₁₆ facultativement substitué avec un ou plusieurs F ;
X chacun indépendamment est un alkylène en C₂₋₂₀ facultativement substitué ;
R^{a} chacun indépendamment est -Z-SiR¹*ₚ*R²*_{q}*R³*ᵣ*, dans lequel
Z chacun indépendamment est O ou un groupe organique divalent ;
R¹ chacun indépendamment est R^{a}' qui a la même définition que R^{a}; le nombre d'atomes de Si liés linéairement via le groupe Z dans R^{a} est ≤ 5;
R² est chacun indépendamment OH ou un groupe hydrolysable ;
R³ est chacun indépendamment H ou un alkyle inférieur ;
p est chacun indépendamment un entier de 0 à 3 ;
*q* est chacun indépendamment un entier de 0 à 3 ; et
*r* est chacun indépendamment un entier de 0 à 3 ;
étant entendu que (*p*+*q*+*r*) = 3 dans chaque -Z-SiR¹ₚR²_{q}R³ᵣ, et que deux atomes de Si ou plus ayant au moins un R² sont présents dans les formules (A1) et (A2).

2. Composé selon la revendication 1, dans lequel X est un alkylène en C₂₋₁₀ non substitué.

3. Composé selon la revendication 1 ou la revendication 2, dans lequel Z est un alkylène.

4. Composé selon l'une quelconque des revendications 1 à 3, dans lequel le nombre d'atomes de Si liés linéairement via le groupe Z dans R^{a} est 1 ou 2, et de préférence est 1.

5. Composé selon l'une quelconque des revendications 1 à 4, dans lequel Rf est un perfluoroalkyle en C₁₋₁₆.

6. Composé selon l'une quelconque des revendications 1 à 5, dans lequel PFPE est un groupe de formule (a), (b) ou (c) : -
(OC₃F₆)*_{d}*- (a)
dans lequel d est un entier de 1 à 200 ;
-(OC₄F₈)*_{c}*-(OC₃F₆)*_{d}*-(OC₂F₄)*ₑ*-(OCF₂)*_{f}*- (b)
dans lequel
c, *d* sont chacun indépendamment un entier de 0 à 30 ;
e, f sont chacun indépendamment un entier de 1 à 200 ;
et (*c*+*d*+*e*+*f*) est un entier de 10 à 200 ; et l'ordre des motifs répétitifs entre parenthèses avec les indices c à f n'est pas limité ;
-(R₆-R₇)*ⱼ*- (c)
dans lequel
R⁶ is OCF₂ ou OC₂F₄;
R⁷ est OC₂F₄, OC₃F₆, OC₄F₈, OC₅F₁₀, OC₆F₁₂ ou une combinaison de deux ou trois groupes de ceux-ci ; et
j est un entier de 2 à 100.

7. Composé selon la revendication 6, dans lequel est un perfluoroalkyle en C₁₋₁₆, X est un alkylène linéaire en C₂₋₁₀ non substitué, et q est 3.

8. Agent de traitement de surface comprenant au moins un composé selon l'une quelconque des revendications 1 à 7.

9. Agent de traitement de surface selon la revendication 8, comprenant en outre un ou plusieurs composants sélectionnés parmi une huile contenant de la fluorine, une huile silicone, un alcool, un catalyseur, un métal de transition, un ion halogénure et un composé contenant un atome ayant une paire d'électrons non partagée dans une structure moléculaire.

10. Agent de traitement de surface selon la revendication 9, comprenant en outre un solvant.

11. Utilisation de l'agent de traitement de surface selon l'une quelconque des revendications 8 à 10 comme agent de revêtement antisalissure ou agent de revêtement étanche à l'eau.

12. Pastille comprenant l'agent de traitement de surface selon l'une quelconque des revendications 8 à 10.

13. Article comprenant un matériau de base et, sur la surface de ce dernier, une couche formée du composé selon l'une quelconque des revendications 1 à 7 ou l'agent de traitement de surface selon l'une quelconque des revendications 8 à 10.

14. Article selon la revendication 13, qui est une membrure optique ou un affichage.
